# EUROPEAN PATENT SPECIFICATION

(11) **EP 4 312 167 B1**
(45) Date of publication and mention of the grant of the patent: **02.12.2026**
(21) Application number: 23159939.0
(22) Date of filing: 03.03.2023
(51) Int. Cl.: G06Q 10/0631

(54) **RETAIL SPACE PLANNING THROUGH PATTERN RECOGNITION**
EINZELHANDELSRAUMPLANUNG DURCH MUSTERERKENNUNG
PLANIFICATION D'ESPACE DE VENTE AU DÉTAIL PAR RECONNAISSANCE DE MOTIFS

(30) Priority: 26.07.2022 IN 202221042736
(43) Date of publication of application: 31.01.2024
(73) Proprietor: Tata Consultancy Services Limited, Maharashtra (IN)
(72) Inventor: THIRUNAVUKKARASU, JEISOBERS, 600096 Chennai, Tamil Nadu (IN); RAO, Shilpa Yadukumar, 600096 Chennai, Tamil Nadu (IN); KARUNAKARAN, ARUN RASIKA, 600096 Chennai, Tamil Nadu (IN)
(74) Representative: Goddar, Heinz J.

(56) References cited:
- EP-A1- 2 916 267
- EP-A1- 3 859 645
- US-A1- 2019 205 806
- US-A1- 2020 019 908
- US-A1- 2020 042 914
- US-A1- 2020 410 517
- US-A1- 2022 122 101
- RAO SHILPA: "The Future of Retail: An Integrated Algorithmic Retail Enterprise", 11 May 2022 (2022-05-11), XP093102589, Retrieved from the Internet <URL:https://www.tcs.com/what-we-do/products-platforms/tcs-optumera/white-paper/algorithmic-retail-enterprise-space-optimization-future> [retrieved on 20231116]
- ANONYMOUS: "Strategic intelligence for retail merchandising", 11 May 2022 (2022-05-11), XP093103376, Retrieved from the Internet <URL:https://www.tcs.com/what-we-do/products-platforms/tcs-optumera/listing?searchKey=tcs:en/what-we-do/products-platforms/tcs-optumera&searchType=White%20Paper&searchPath=/content/tcs/global/en/what-we-do/products-platforms/tcs-optumera> [retrieved on 20231120]
- SONG LIU ET AL: "Planogram Compliance Checking Based on Detection of Recurring Patterns", ARXIV.ORG, CORNELL UNIVERSITY LIBRARY, 201 OLIN LIBRARY CORNELL UNIVERSITY ITHACA, NY 14853, 22 February 2016 (2016-02-22), XP080685103
- JONCEVSKI IGOR ET AL: "AN ASSORTMENT PLANNING PROCESS ANALYSIS: THE CASES OF A NORWEGIAN AND A DUTCH RETAILER", 1 September 2019 (2019-09-01), XP093102879, Retrieved from the Internet <URL:http://www.cek.ef.uni-lj.si/magister/joncevski3603-B.pdf> [retrieved on 20231117]
- ANONYMOUS: "Strategic intelligence for retail merchandising", 11 May 2022 (2022-05-11), XP93103376, Retrieved from the Internet <URL:https://www.tcs.com/what-we-do/products-platforms/tcs-optumera/listing?searchKey=tcs:en/what-we-do/products-platforms/tcs-optumera&searchType=White%20Paper&searchPath=/content/tcs/global/en/what-we-do/products-platforms/tcs-optumera> [retrieved on 20231120]

## Description

### CROSS-REFERENCE TO RELATED APPLICATIONS AND PRIORITY

The present application claims priority to Indian application no. 202221042736, filed on July 26, 2022.

### TECHNICAL FIELD

The embodiments herein generally relate to the field of retail store management and, more particularly, to a method and system for space planning providing techniques to create floor plans and planograms across retail stores of a retailer.

### BACKGROUND

In retail, space planning is carried out at corporate level and there are challenges in getting holistic view of space optimization at corporate level of retailer. Retailers such as Walmart or the like have enormous number of stores and macro space optimization is carried out at individual store level. Space optimization tools have provision to run space optimization for all the stores simultaneously and they recommend new space for each category for each store. A category may be defined as group of products that are having attribute values that are alternative to each other. Example for category are women's tops, women's suits, men's shirts, and men's suits, mobile, dairy, etc., A department is group of categories that meet related needs. Example for department are beverages, cereals, snacks, etc., Each store may behave differently with respect to space allocation. Based on corporate need, macro space optimization is carried out for the objective of expand space, reduce space and constant space separately. Due to these procedures, the number of space recommendations analyzed at corporate level increases extremely high making it difficult to bring key inferences out of these recommendations. Analyst at Head Quarters (HQ) of the retailer faces challenges in getting holistic view of space optimization.

Further, based on corporate strategy such as expansion or reduction of total store space, planograms are created. Major retailers create planogram at individual store level mostly or in some instances at store cluster level to save effort, time, and cost. These clusters are formed based on store size, store format, demographic, competition, etc., and the approach faces challenges in defining the trade area to derive demographic variable, competition, and others. It is challenging to define trade area. In an instance deciding competition intensity based on trade area is a challenging and subjective one. For example, for a general merchant retailer, the trade area for food related categories of a store could be 5 miles whereas for a laptop category it could be 30 miles since the customers might be willing to travel different distances depending upon the category. Due to these factors, clustering based on sales drivers such as demo, competition, weather, etc. has challenges and provides inaccurate end results.

EP 2 916 267 A1 discloses obtaining and processing input data for each of a plurality of stores. The input data includes at least one of a pre-processed performance data, a pre-processed demographics data, and a pre-processed performance data. Clustering the plurality of stores into one or more department-level clusters based on the input data. Ranking corresponding to at least one department, for each department-level cluster, to obtain a set of optimal departments for the space planning and optimization using a rapid linearization algorithm. Ranking the plurality of stores, for each department-level cluster, to obtain a set of optimal stores for the space planning and optimization. The optimal stores are a higher ranked predetermined number of stores in each said department-level cluster.

### SUMMARY

Embodiments of the present disclosure present technological improvements as solutions to one or more of the above-mentioned technical problems recognized by the inventors in conventional systems.

For example, in one embodiment, a method for space planning is provided. The method includes acquiring store-data over a predefined time span from a plurality of stores and obtaining sales, space, and demographic information from the store-data on a plurality of categories in the plurality of stores. Further, the method includes processing the sales, space, and demographic information, via a space optimization tool implemented by the one or more hardware processors, to perform space optimization in accordance with a set of predefined optimization rules comprising category level optimization rules and in aisle optimization rules, to generate: (a) a plurality of final space allocations for each of the plurality of categories of each of the plurality of stores; (b) a plurality of delta space allocations for each of the plurality of categories of each of the plurality of stores, wherein a delta space is defined as a difference between an initial space occupied by a category amongst the plurality of categories and a final space suggested by the space optimization tool for the category; and (c) details on a space allocation order for the category for each incremental foot during each iteration of space optimization, by-the space optimization tool, captured in a plurality of log files for a plurality of stores.

Further, the method includes creating a plurality of vectors comprising: (a) a final space vector capturing a final space allocation corresponding to each of the plurality of categories of a store among the plurality of stores, wherein the final space allocation corresponding to each of the plurality of stores is processed in a single row vector format as the final space vector; (b) a delta space vector capturing a delta space allocation for each of the plurality of categories for the store, wherein the delta space allocation corresponding to each of the plurality of stores is processed in a single row vector format as the delta space vector; and (c) an allocation order vector capturing order of priority in space allocation from the space allocation order across the plurality of categories for the store, wherein a log file for a store from amongst the plurality of log files is processed into a plurality of row vectors with same length noted as 'basic allocation order vectors', wherein each row vector represents an iteration of optimization-, and number of row vectors is equal to number of iterations and length of each row vector is equal to number of the plurality of categories of corresponding store, each cell of the row represents a category among the plurality of categories, and value of each cell of the row represents a fixed incremental space allocation for the category for an incremental foot during the iteration, processing of basic allocation order vectors is carried out by calculating cumulative totals for each iteration and termed as 'cumulative total allocation order vectors' and further processing is carried out by adding basic allocation order vectors or cumulative total allocation order vectors one by one to form a single row vector representing the allocation order vector in two formats namely basic allocation order vector and cumulative allocation order vector.

Furthermore, the method includes generating a plurality of space matrices wherein each column represents the store and number of columns are equivalent to number of the plurality of stores, and wherein each row represents a category and number of rows equivalent to a number of the plurality of categories, the plurality of space matrices comprising: (a) a final space matrix, generated from the final space vector corresponding to each of the plurality of stores, by converting the format of the final space vector from a single row vector to a single column vector, and considering the plurality of the stores and arranging a plurality of final space vectors of the plurality of stores into a matrix format, wherein value of each element of the column vector represents final space allocated to each of the plurality of categories; (b) delta space matrix, generated from the delta space vector corresponding to each of the plurality of stores, by converting format of the delta space vector from a single row vector to a single column vector, and considering the plurality of the stores and arranging a plurality of delta space vectors of the plurality of stores into a matrix format; and (c) a space allocation order matrix, generated from the allocation order vector corresponding to each of the plurality of stores, by converting the allocation order vector format to a column vector format and considering the plurality of stores and arranging a plurality of allocation order vectors of the plurality of stores into a matrix format.

Further, the method includes processing via a pattern extraction tool implemented by the one or more hardware processors the final space matrix, the delta space matrix and the space allocation order matrix by using a plurality of formats of measurements of final space, delta space, and the space allocation order and applying standardization, a covariance matrix creation, and principal component analysis (PCA) to identify a set of patterns for each of the final space matrix, the delta space matrix and the space allocation order matrix based on eigen vectors and eigen values generated during the (PCA). Further, the method includes generating a store level mismatch score by comparing existing floor plans with the set of patterns derived from each of the final space matrix, the delta space matrix and the space allocation order matrix, and processing the set of patterns for each of the final space matrix , the delta space matrix and the space allocation order matrix under the plurality of formats of measurements of the final space, the delta space, and the space allocation order to determine quality of the set of patterns from variance contribution of the set of patterns of PCA.

Furthermore, the method includes performing three level iterations comprising: (a) a first level of iterations to select top set of patterns from the set of patterns formed from each of (i) the final space matrix (ii) the delta space matrix, and (iii) the allocation order, under different formats of final space, delta space, and allocation order and selecting a top set of pattern for a suitable format among one of the final space, the delta space, and the space allocation order, wherein the quality of set of patterns is maximum for the top set of pattern; (b) a second level of iterations to apply to set of patterns received from the first level iterations in which outcome of each iteration within second level of iterations is used to locate a mismatch store using the mismatch score and recalculating any one of the (i) the final space matrix (ii) the delta space matrix, and (iii) the space allocation order for only located mismatching store using identified rules based on outcome of previous iteration within second level of iterations, and generating the set of patterns by adding one of the recalculated (i) the final space matrix (ii) the delta space matrix, and (iii) the space allocation order, wherein iteration continues until no store is deviating from the pattern in terms of aisle fitment; and (c) a third level of iterations applied to set of patterns received from second level iterations in which outcome of each iteration within the third level of iterations is used to locate the store deviating from the set of patterns using multivariate distance, and recalculating any one of the (i) the final space matrix (ii) the delta space matrix, and (iii) the allocation order for only those deviating store using identified rules based on outcome of previous iteration within third level of iterations, and generating set of patterns by adding one of the recalculated (i) the final space matrix (ii) the delta space matrix, and (iii) the space allocation, wherein iteration continues until no store is deviating from the pattern.

Further, the method includes generating a set of floorplans and planograms in accordance with the set of patterns received from third level iterations, wherein the floorplans and planograms are recommended to each of the plurality of stores in accordance with set of patterns received from third level iterations.

In another aspect, a system for space planning is provided. The system comprises a memory storing instructions; one or more Input/Output (I/O) interfaces; and one or more hardware processors coupled to the memory via the one or more I/O interfaces, wherein the one or more hardware processors are configured by the instructions to acquire store-data over a predefined time span from a plurality of stores and obtaining sales, space, and demographic information from the store-data on a plurality of categories in the plurality of stores. Further, the system processes the sales, space, and demographic information, via a space optimization tool implemented by the one or more hardware processors, to perform space optimization in accordance with a set of predefined optimization rules comprising category level optimization rules and in aisle optimization rules, to generate: (a) a plurality of final space allocations for each of the plurality of categories of each of the plurality of stores; (b) a plurality of delta space allocations for each of the plurality of categories of each of the plurality of stores, wherein a delta space is defined as a difference between an initial space occupied by a category amongst the plurality of categories and a final space suggested by the space optimization tool for the category; and (c) details on a space allocation order for the category for each incremental foot during each iteration of space optimization, by-the space optimization tool, captured in a plurality of log files for a plurality of stores.

Further, system creates a plurality of vectors comprising: (a) a final space vector capturing a final space allocation corresponding to each of the plurality of categories of a store among the plurality of stores, wherein the final space allocation corresponding to each of the plurality of stores is processed in a single row vector format as the final space vector; (b) a delta space vector capturing a delta space allocation for each of the plurality of categories for the store, wherein the delta space allocation corresponding to each of the plurality of stores is processed in a single row vector format as the delta space vector; and (c) an allocation order vector capturing order of priority in space allocation from the space allocation order across the plurality of categories for the store, wherein a log file for a store from amongst the plurality of log files is processed into a plurality of row vectors with same length noted as 'basic allocation order vectors', wherein each row vector represents an iteration of optimization-, and number of row vectors is equal to number of iterations and length of each row vector is equal to number of the plurality of categories of corresponding store, each cell of the row represents a category among the plurality of categories, and value of each cell of the row represents a fixed incremental space allocation for the category for an incremental foot during the iteration, processing of basic allocation order vectors is carried out by calculating cumulative totals for each iteration and termed as 'cumulative total allocation order vectors' and further processing is carried out by adding basic allocation order vectors or cumulative total allocation order vectors one by one to form a single row vector representing the allocation order vector in two formats namely basic allocation order vector and cumulative allocation order vector.

Furthermore, the system generates a plurality of space matrices wherein each column represents the store and number of columns are equivalent to number of the plurality of stores, and wherein each row represents a category and number of rows equivalent to a number of the plurality of categories, the plurality of space matrices comprising: (a) a final space matrix, generated from the final space vector corresponding to each of the plurality of stores, by converting the format of the final space vector from a single row vector to a single column vector, and considering the plurality of the stores and arranging a plurality of final space vectors of the plurality of stores into a matrix format, wherein value of each element of the column vector represents final space allocated to each of the plurality of categories; (b) delta space matrix, generated from the delta space vector corresponding to each of the plurality of stores, by converting format of the delta space vector from a single row vector to a single column vector, and considering the plurality of the stores and arranging a plurality of delta space vectors of the plurality of stores into a matrix format; and (c) a space allocation order matrix, generated from the allocation order vector corresponding to each of the plurality of stores, by converting the allocation order vector format to a column vector format and considering the plurality of stores and arranging a plurality of allocation order vectors of the plurality of stores into a matrix format.

Further, the system processes via a pattern extraction tool implemented by the one or more hardware processors the final space matrix, the delta space matrix and the space allocation order matrix by using a plurality of formats of measurements of final space, delta space, and the space allocation order and applying standardization, a covariance matrix creation, and principal component analysis (PCA) to identify a set of patterns for each of the final space matrix, the delta space matrix and the space allocation order matrix based on eigen vectors and eigen values generated during the (PCA). Further, the system generates a store level mismatch score by comparing existing floor plans with the set of patterns derived from each of the final space matrix, the delta space matrix and the space allocation order matrix, and processing the set of patterns for each of the final space matrix , the delta space matrix and the space allocation order matrix under the plurality of formats of measurements of the final space, the delta space, and the space allocation order to determine quality of the set of patterns from variance contribution of the set of patterns of PCA.

Furthermore, the system performs three level iterations comprising: (a) a first level of iterations to select top set of patterns from the set of patterns formed from each of (i) the final space matrix (ii) the delta space matrix, and (iii) the allocation order, under different formats of final space, delta space, and allocation order and selecting a top set of pattern for a suitable format among one of the final space, the delta space, and the space allocation order, wherein the quality of set of patterns is maximum for the top set of pattern; (b) a second level of iterations to apply to set of patterns received from the first level iterations in which outcome of each iteration within second level of iterations is used to locate a mismatch store using the mismatch score and recalculating any one of the (i) the final space matrix (ii) the delta space matrix, and (iii) the space allocation order for only located mismatching store using identified rules based on outcome of previous iteration within second level of iterations, and generating the set of patterns by adding one of the recalculated (i) the final space matrix (ii) the delta space matrix, and (iii) the space allocation order, wherein iteration continues until no store is deviating from the pattern in terms of aisle fitment; and (c) a third level of iterations applied to set of patterns received from second level iterations in which outcome of each iteration within the third level of iterations is used to locate the store deviating from the set of patterns using multivariate distance, and recalculating any one of the (i) the final space matrix (ii) the delta space matrix, and (iii) the allocation order for only those deviating store using identified rules based on outcome of previous iteration within third level of iterations, and generating set of patterns by adding one of the recalculated (i) the final space matrix (ii) the delta space matrix, and (iii) the space allocation, wherein iteration continues until no store is deviating from the pattern.

Further, the system generates a set of floorplans and planograms in accordance with the set of patterns received from third level iterations, wherein the floorplans and planograms are recommended to each of the plurality of stores in accordance with set of patterns received from third level iterations.

In yet another aspect, there are provided one or more non-transitory machine-readable information storage mediums comprising one or more instructions, which when executed by one or more hardware processors causes a method for space planning. The method includes acquiring store-data over a predefined time span from a plurality of stores and obtaining sales, space, and demographic information from the store-data on a plurality of categories in the plurality of stores. Further, the method includes processing the sales, space, and demographic information, via a space optimization tool implemented by the one or more hardware processors, to perform space optimization in accordance with a set of predefined optimization rules comprising category level optimization rules and in aisle optimization rules, to generate: (a) a plurality of final space allocations for each of the plurality of categories of each of the plurality of stores; (b) a plurality of delta space allocations for each of the plurality of categories of each of the plurality of stores, wherein a delta space is defined as a difference between an initial space occupied by a category amongst the plurality of categories and a final space suggested by the space optimization tool for the category; and (c) details on a space allocation order for the category for each incremental foot during each iteration of space optimization, by-the space optimization tool, captured in a plurality of log files for a plurality of stores.

Further, the method includes creating a plurality of vectors comprising: (a) a final space vector capturing a final space allocation corresponding to each of the plurality of categories of a store among the plurality of stores, wherein the final space allocation corresponding to each of the plurality of stores is processed in a single row vector format as the final space vector; (b) a delta space vector capturing a delta space allocation for each of the plurality of categories for the store, wherein the delta space allocation corresponding to each of the plurality of stores is processed in a single row vector format as the delta space vector; and (c) an allocation order vector capturing order of priority in space allocation from the space allocation order across the plurality of categories for the store, wherein a log file for a store from amongst the plurality of log files is processed into a plurality of row vectors with same length noted as 'basic allocation order vectors', wherein each row vector represents an iteration of optimization-, and number of row vectors is equal to number of iterations and length of each row vector is equal to number of the plurality of categories of corresponding store, each cell of the row represents a category among the plurality of categories, and value of each cell of the row represents a fixed incremental space allocation for the category for an incremental foot during the iteration, processing of basic allocation order vectors is carried out by calculating cumulative totals for each iteration and termed as 'cumulative total allocation order vectors' and further processing is carried out by adding basic allocation order vectors or cumulative total allocation order vectors one by one to form a single row vector representing the allocation order vector in two formats namely basic allocation order vector and cumulative allocation order vector.

Furthermore, the method includes generating a plurality of space matrices wherein each column represents the store and number of columns are equivalent to number of the plurality of stores, and wherein each row represents a category and number of rows equivalent to a number of the plurality of categories, the plurality of space matrices comprising: (a) a final space matrix, generated from the final space vector corresponding to each of the plurality of stores, by converting the format of the final space vector from a single row vector to a single column vector, and considering the plurality of the stores and arranging a plurality of final space vectors of the plurality of stores into a matrix format, wherein value of each element of the column vector represents final space allocated to each of the plurality of categories; (b) delta space matrix, generated from the delta space vector corresponding to each of the plurality of stores, by converting format of the delta space vector from a single row vector to a single column vector, and considering the plurality of the stores and arranging a plurality of delta space vectors of the plurality of stores into a matrix format; and (c) a space allocation order matrix, generated from the allocation order vector corresponding to each of the plurality of stores, by converting the allocation order vector format to a column vector format and considering the plurality of stores and arranging a plurality of allocation order vectors of the plurality of stores into a matrix format.

Further, the method includes processing via a pattern extraction tool implemented by the one or more hardware processors the final space matrix, the delta space matrix and the space allocation order matrix by using a plurality of formats of measurements of final space, delta space, and the space allocation order and applying standardization, a covariance matrix creation, and principal component analysis (PCA) to identify a set of patterns for each of the final space matrix, the delta space matrix and the space allocation order matrix based on eigen vectors and eigen values generated during the (PCA). Further, the method includes generating a store level mismatch score by comparing existing floor plans with the set of patterns derived from each of the final space matrix, the delta space matrix and the space allocation order matrix, and processing the set of patterns for each of the final space matrix , the delta space matrix and the space allocation order matrix under the plurality of formats of measurements of the final space, the delta space, and the space allocation order to determine quality of the set of patterns from variance contribution of the set of patterns of PCA.

Furthermore, the method includes performing three level iterations comprising: (a) a first level of iterations to select top set of patterns from the set of patterns formed from each of (i) the final space matrix (ii) the delta space matrix, and (iii) the allocation order, under different formats of final space, delta space, and allocation order and selecting a top set of pattern for a suitable format among one of the final space, the delta space, and the space allocation order, wherein the quality of set of patterns is maximum for the top set of pattern; (b) a second level of iterations to apply to set of patterns received from the first level iterations in which outcome of each iteration within second level of iterations is used to locate a mismatch store using the mismatch score and recalculating any one of the (i) the final space matrix (ii) the delta space matrix, and (iii) the space allocation order for only located mismatching store using identified rules based on outcome of previous iteration within second level of iterations, and generating the set of patterns by adding one of the recalculated (i) the final space matrix (ii) the delta space matrix, and (iii) the space allocation order, wherein iteration continues until no store is deviating from the pattern in terms of aisle fitment; and (c) a third level of iterations applied to set of patterns received from second level iterations in which outcome of each iteration within the third level of iterations is used to locate the store deviating from the set of patterns using multivariate distance, and recalculating any one of the (i) the final space matrix (ii) the delta space matrix, and (iii) the allocation order for only those deviating store using identified rules based on outcome of previous iteration within third level of iterations, and generating set of patterns by adding one of the recalculated (i) the final space matrix (ii) the delta space matrix, and (iii) the space allocation, wherein iteration continues until no store is deviating from the pattern.

Further, the method includes generating a set of floorplans and planograms in accordance with the set of patterns received from third level iterations, wherein the floorplans and planograms are recommended to each of the plurality of stores in accordance with set of patterns received from third level iterations. It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A illustrates an architectural overview of a system for space planning enabling creation of floor plans and planograms across retail stores of a retailer, in accordance with some embodiments of the present disclosure.
FIG. 1B depicts optimal number of planograms that can be generalized across stores clusters unlike existing approach where planograms are generated uniquely for each store, in accordance with some embodiments of the present disclosure.
FIG. 2 is a functional block diagram of the system of FIG. 1A, for space planning, in accordance with some embodiments of the present disclosure.
FIGS. 3A through 3C (collectively referred as FIG. 3) is a flow diagram illustrating a method for space planning enabling creation of floor plans and planograms, using the system of FIG. 2, in accordance with some embodiments of the present disclosure.
FIGS. 4A through 4F (collectively referred as FIG. 4) are use case examples depicting generation of a final space vector, a delta space vector, and an allocation order vector by the system of FIG. 1A for generating optimal space recommendations across stores, in accordance with some embodiments of the present disclosure.
FIG. 5 depicts generation of final space matrix from final space vectors, in accordance with some embodiments of the present disclosure.
FIGS. 6A and 6B depicts a set of patterns generated post applying Principal Component Analysis (PCA) on from final space matrix, in accordance with some embodiments of the present disclosure.
FIG. 7A depicts a use case example of overfilled, underfilled, fitted aisle level view for 'Beverages' and 'Cereals' department with recommended category level optimized space arranged on both sides of aisle, in accordance with some embodiments of the present disclosure.
7B depict aisle mismatch score for a store based on the extent of how the categories are underfilled or overfilled for the store when they are fitted in aisle with optimized space recommendation for the store, in accordance with some embodiments of the present disclosure.
FIG. 8 is a use case example depicting identification of sub range of space change within predefined rule of space change for a category for a store, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In retail, macro space optimization is carried out at individual stores to allocate optimum space for each category. As each retailer has many stores and macro space optimization is experimented with different objectives such as expand space, reduce space and constant space of a store individually, the number of space recommendations analyzed at corporate level increases extremely high making it difficult to bring key inferences out of these recommendations and creating challenges in implementation of results such as creation of planograms and floor plans.

Embodiments of the present disclosure provide a method and system for space planning providing techniques to create floor plans and planograms. The method identifies underlying patterns that reside in space recommendations across stores and creation of optimal number of floor plans and planograms in accordance with the identified set of patterns unlike large number of floor plans or planograms generated by state of the art space planning systems.

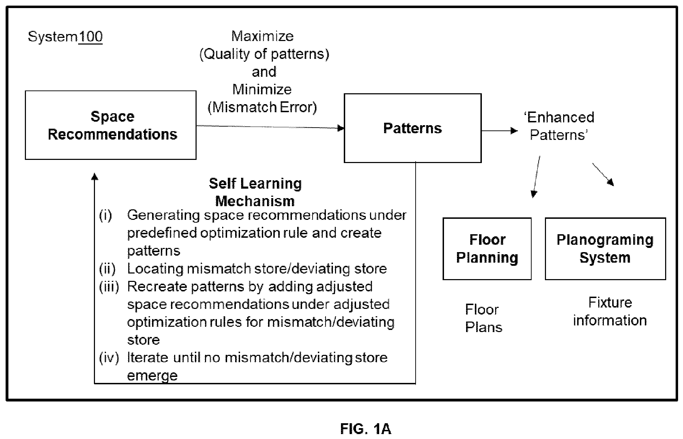

Referring now to the drawings, and more particularly to FIGS. 1A through 8, where similar reference characters denote corresponding features consistently throughout the figures, there are shown preferred embodiments and these embodiments are described in the context of the following exemplary system and/or method.

FIG. 1A illustrates an architectural overview of a system 100 for space planning enabling creation of floor plans and planograms across retail stores of a retailer, in accordance with some embodiments of the present disclosure.

The system 100, via a pattern extraction tool, extracts patterns from generated space recommendations by suitable data formats and using data mining techniques. such as Principal Component Analysis (PCA). Factors that are responsible for pattern formation are identified by mapping those patterns with available sales drivers and applying suitable multivariate models such as canonical discriminant analysis. Thus, with the system 100, analyst at corporate office of the retailer is able to get top patterns with their magnitude and potential causes to understand the process better and to make strategies effectively.

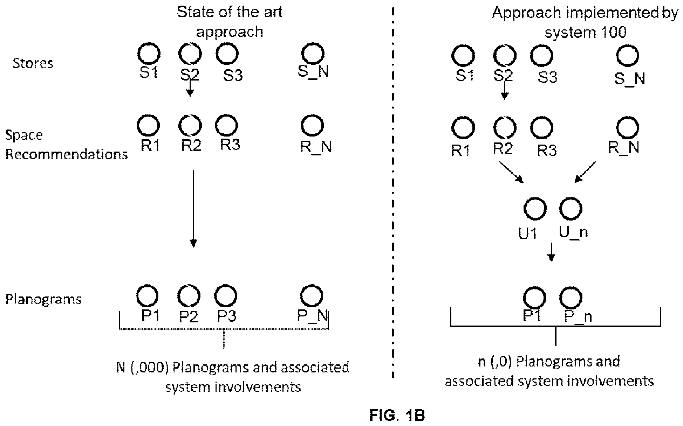

Further, the system 100 also creates planogram for each rational group of stores based on pattern detected. FIG. 1B depicts optimal number of planograms that can be generated across store groups unlike existing approach where planograms are generated uniquely for each store, in accordance with some embodiments of the present disclosure.

As patterns are derived from hidden relationship across stores, it has the better insights. The patterns are formed based on space allocation logic which varies across stores, and which is based on location of the store and other causative factors such as competition, promotion, etc., the patterns formed from space allocation are useful to be used for practical applications such as remodeling of stores or resetting of stores. Remodeling of stores refers to major changes which is done for once in many years and it is usually carried out by changing floor plans and changing racks, etc. As floor planning execution cannot be altered frequently and involves huge cost impact in terms of labor, procurement of infrastructure, fixtures, product inventory and other store remodel aspects, it is given utmost importance and considered as one of the primary functions of retail merchandise planning. Floor planning is the process of arranging the categories and department within the retail store floor based on space allocated to the respective department and categories. Resetting of stores refers to minor changes which is done, once in 3 months and it is usually carried out by changing planograms. Floor planning happens at a macro level post finalizing which the micro level planning of planogram, fixture, and item into this floor space happens. Floor planning happens at the corporate level for each retail store guided by space planner, analyst, category managers and store managers.

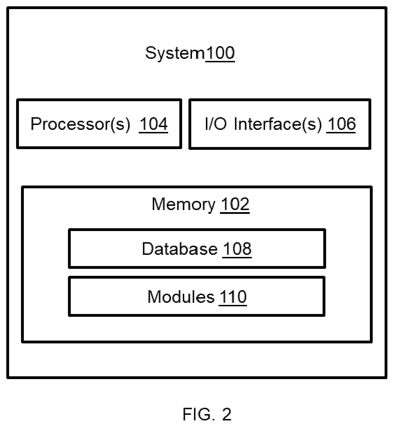

FIG. 2 is a functional block diagram of the system 100 of FIG. 1A, for space planning, in accordance with some embodiments of the present disclosure. In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface to display the generated target images and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110 such as a pattern extraction tool, a space optimization tool (not shown). The plurality of modules 110 further include programs or coded instructions that supplement applications or functions performed by the system 100 for executing different steps involved in the process of space planning providing optimal space recommendations for categories across retail stores of the retailer, being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown). Further, the memory 102 may comprise information pertaining to input(s)/output(s) of each step performed by the processor(s) 104 of the system100 and methods of the present disclosure.

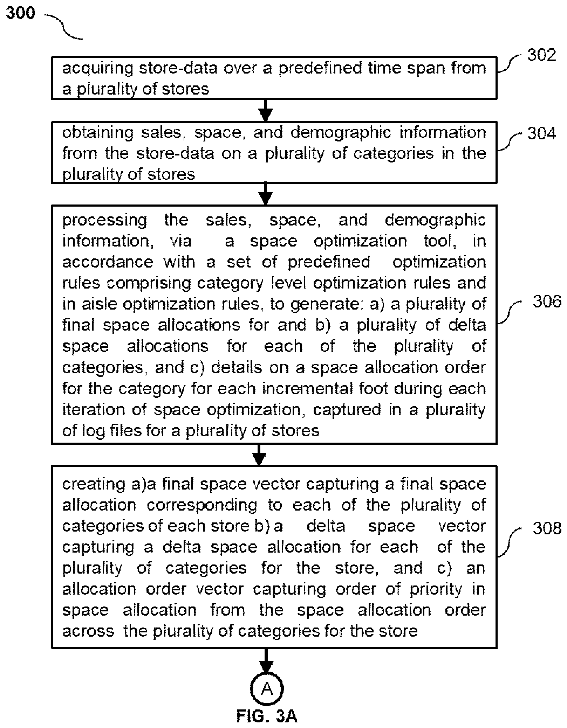

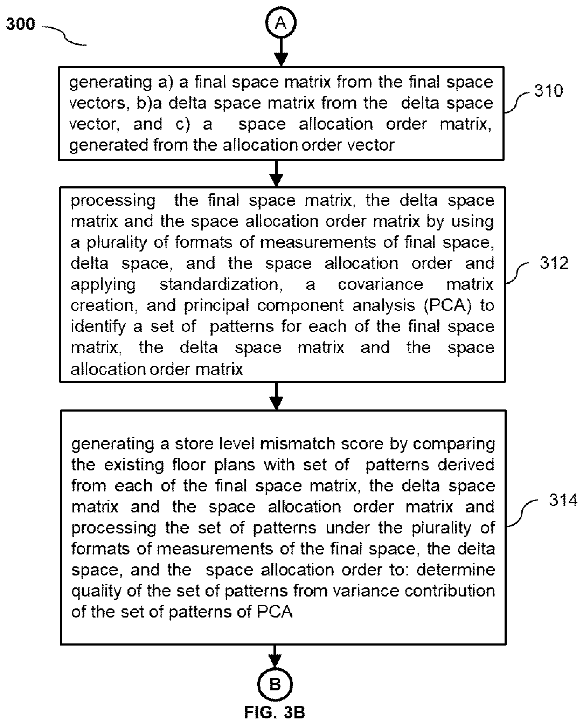

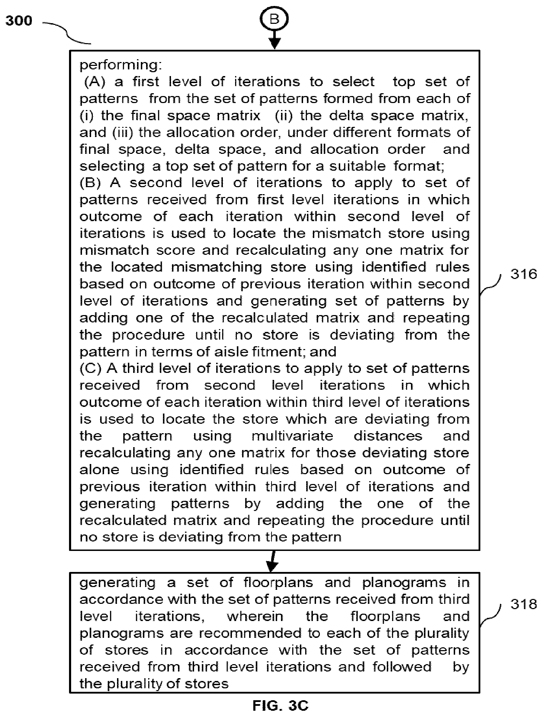

Further, the memory 102 includes a database 108. The database (or repository) 108 may include a plurality of abstracted piece of code for refinement and data that is processed, received, or generated as a result of the execution of the plurality of modules in the module(s) 110. It can store space recommendations, identified patterns from the space recommendation, planograms, floor plans and the like. Although the data base 108 is shown internal to the system 100, it will be noted that, in alternate embodiments, the database 108 can also be implemented external to the system 100, and communicatively coupled to the system 100. The data contained within such external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in flow diagrams and use case examples depicted FIG. 3 through FIG. 7B.

FIGS. 3A through 3C (collectively referred as FIG. 3) is a flow diagram illustrating a method 300 for space planning enabling creation of floor plans and planograms across the retail stores of the retailer, using the system of FIG. 2, in accordance with some embodiments of the present disclosure.

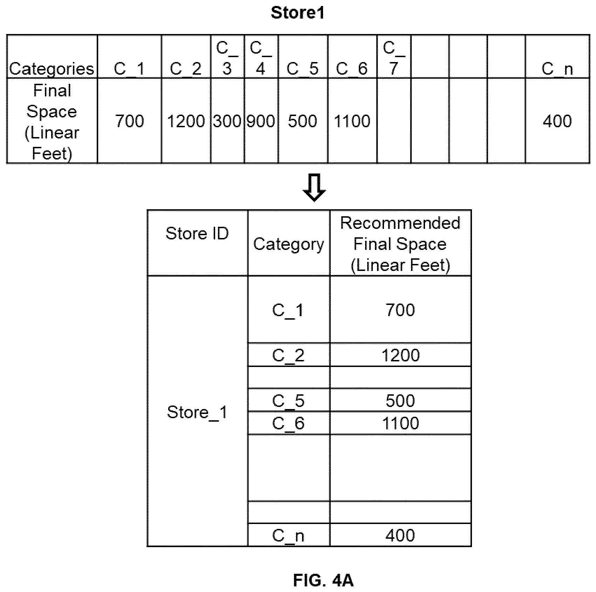

In an embodiment, the system 100 comprises one or more data storage devices or the memory 102 operatively coupled to the processor(s) 104 and is configured to store instructions for execution of steps of the method 300 by the processor(s) or one or more hardware processors 104. The steps of the method 300 of the present disclosure will now be explained with reference to the components or blocks of the system 100 as depicted in FIG. 1B and the steps of flow diagram as depicted in FIG. 3 along with examples depicted in FIGS. 4A through 8. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to the steps of the method 300, at step 302 of the method 300, the one or more hardware processors 104 acquire store-data over a predefined time span from a plurality of stores. At step 304 of the method 300, the one or more hardware processors 104 obtain sales, space, and demographic information from the store-data on a plurality of categories in the plurality of stores. Information associated with space optimization namely sales, space and demographic information for a predefined period or time span is received from various sources. POS (Point Of Sales) systems capture category level sales information. Historical space allocated to categories of a store are received from historical planograms. Demographic information about the stores are received from third party vendors and stored in respective systems.

At step 306 of the method 300, the one or more hardware processors 104 processes the sales, space, and demographic information, via the space optimization tool performing space optimization in accordance with a set of predefined optimization rules comprising category level optimization rules and in aisle optimization rules, to generate the following:
a) A plurality of final space allocations for each of the plurality of categories of each of the plurality of stores.
b) A plurality of delta space allocations for each of the plurality of categories of each of the plurality of stores, wherein a delta space is defined as a difference between an initial space occupied by a category amongst the plurality of categories and a final space suggested by the space optimization tool for the category.
c) Details on a space allocation order for the category for each incremental foot during each iteration of space optimization, by-the space optimization tool, captured in a plurality of log files for a plurality of stores.

The optimization rules refer to guidelines that need to be followed by a space optimization algorithm to address retail strategies and to avoid implementation issues and the optimization results need to adhere to these guidelines. The rules may be predefined or dynamic which is explained in detail in latter part. Many types of optimization rules are followed during optimization. Few examples are mentioned below:
i. Category level optimization rules - These rules vary across categories and across stores. The change in space in measured in comparison to old space or existing space or the space occupied by the category currently. Percentage of change may lead to remodeling of store or resetting of stores. Usually, percentage of change may vary from 0 to 20 percent in which 0 indicates that no space change and 20 indicates 20 percentage of change as compared to old space. 20 % space change may be noted as 80 to 120 % of existing space and 0 % change is noted as 100 % of existing space. For example, as per category optimization rules, 'minimum and maximum space for a category' is fixed as 80 and 120, here minimum space of a category is 80 % of current space and maximum space is 120 % of current space of the category. If the current space of a category is 500 feet and the minimum space is fixed as 400 feet and the maximum space is fixed as 600 by the optimization algorithm and optimization is carried out by the optimization algorithm by adhering to rules assigned to all the categories. Optimization engine produces optimal solutions for the given category level optimization rules. In some instances, percentage change may vary from 0 to 40 % depending on the location of store and performance of the categories.
   An Ideal range of space changes for a category - Retailers used to face challenges in deciding the percentage of change that is ideal for categories as well as across stores. As change in space of a category is related with implementation issues in a store such as number of categories that could be accommodated by an aisle or by many aisles, change in space a category can lead to structural changes of one or more aisles. The system 100 decides the ideal range of space changes for a category in multiple ways within the scope of present disclosure. In one instance, historical number of space changes and magnitude of space changes of a category across stores is proposed as a measure in deciding ideal range of space changes for a category. The underlying logic is that if a category has more variations in the space for a store or across stores in the past, then it can accommodate more changes in the future. Due to this logic, implementation issues may be reduced. In one instance system calculates number of space changes and magnitude of space changes of a category for a store for a historical predefined period from historical planograms and decides the ideal range of percentage of change for a category for the future. The ideal range of percentage change for a category is decided by system in such a way that it has direct relation with historical number of space changes and magnitude of space changes of the category for the store. It is repeated for each category. In an instance, system suggests the ideal range of space change in percentage for a category for a store as 0 to 40 % for those stores having relatively higher number of space changes and higher magnitude of space changes for the category in the past and in contrast system suggests the ideal range of space change for a category for a store in percentage as 0 to 5 %.for those stores having relatively lower number of space changes and lower magnitude of space changes of the category in the past. Thus, system decides category level optimization rule specific to a category of a store based on historical number of space changes and magnitude of space changes of the category. Category level optimization rules varies across categories within a store which is decided by the system based on historical number of space changes and magnitude of space changes of each category.
ii. In Aisle optimization rules refer to guidelines specific to aisle as per floor planning tool that need to be followed during space planning so that implementation issues such as alterations of racks are avoided or minimized. In aisle optimization rules are the rules related with aisle. In one example, it indicates about specific categories that could be accommodated within each aisle. With In-Aisle optimization, the optimization rules are defined based on the available space in terms aisle length. For example, one full aisle of length 20 ft (right side 20 and left side 20, total available aisle space = 40) are allocated for Snacks department and hence all the categories within the Snacks department (like Chips, Biscuits, Cookies, Crackers, Savories etc.) will all be placed within the available aisle space on both sides of the aisle. Now the optimization rules are framed in such a way that post optimization the newly allocated category space together does not over space or under space the available 20 ft of each side of the aisle when arranged in an aisle setup. i.e., minimum, and maximum overall space for each aisle side is 20ft.
   - Before space of categories within snacks C1, C2, C3, C4, C5 are 12+8 = 20 (Left Side) / 10+5+5 =20 (Right Side) (Total 40)
   - After space while considering in-aisle rules C1, C2, C3, C4, C5 are 10+10=20 (Left Side) /8+6+6= 20 (Right Side) (Total 40)
   In the above case the optimized recommendations still remains at total of 20 on each side of the aisle so that the categories fit in the aisle well and it is not under or over spaced.

Aisle level complexities may arise in diverse ways. In an instance, multiple departments may be placed within same aisle, such as right side of an aisle may occupy department1 and first of left side of the aisle may be occupied bydepartment2 and rest of left side may be occupied by department 3. Hence more aisle category level space limits need to be applied for each of the department. In another instance, Same departments are placed across multiple aisles fully or partially (E.g., Dry Grocery departments are placed in aisle1, aisle2, half of aisle3 and making the size as 2.5 aisle). At step 308 of the method 300, the one or more hardware processors 104 create a plurality of vectors comprising:
a) A final space vector capturing a final space allocation corresponding to each of the plurality of categories of a store among the plurality of stores. The final space allocation corresponding to each of the plurality of stores is processed in a single row vector format as the final space vector. The final space is measured in the plurality of formats comprising, (i) linear feet, (ii) Square feet (iii) weighted visible space and (iv) cognitive visible space.
b) A delta space vector capturing a delta space allocation for each of the plurality of categories for the store. The delta space allocation corresponding to each of the plurality of stores is processed in a single row vector format as the delta space vector. The delta space is measured in the plurality of formats comprising, (i) the delta space in square feet,(ii) the delta space in percentage, calculated by proportion of the delta space as compared to old space occupied by each of the plurality of categories and (iii) the delta space in percentage, calculated by proportion of delta space as compared to available space for each of the plurality of categories of each of the plurality of stores in which the available space is decided by the optimization rules such as minimum space and maximum space.
c) An allocation order vector capturing order of priority in space allocation from the space allocation order across the plurality of categories for the store. A log file for a store among the plurality of log files is processed into a plurality of **row** vectors with same length noted as 'basic allocation order vectors.' The order of space occupation is represented by the plurality of formats comprising (i) incremental square feet and (ii) cumulative square feet. Each row vector represents an iteration of optimization-, and number of row vectors is equal to number of iterations and length of each row vector is equal to number of the plurality of categories of corresponding store, each cell of the row represents a category among the plurality of categories, and value of each cell of the row represents a fixed incremental space allocation for the category for an incremental foot during the iteration, processing of basic allocation order vectors is carried out by calculating cumulative totals for each iteration and termed as ''cumulative total allocation order vectors'. Further processing is carried out by adding basic allocation order vectors or cumulative total allocation order vectors one by one to form a single row vector representing the allocation order vector in two formats namely basic allocation order vector and cumulative allocation order vector.

FIGS. 4A through 4F explain generation of the plurality of vectors via use case examples for single store for a selected categories of products.

The space optimization tool provides space recommendations for a store. It has information on the new space that is recommended to each category of the store. The recommendations are based on the past historical performance of the categories which varies based on the demographic information associated with the store and historical space allocated to the store and comparative performance of the categories.

The final space - The space optimization tool has provision to run space optimization for all the stores simultaneously by applying predefined optimization rules and they recommend new space for each category for each store. For example, the new space for a category may be in different format such as final space in actual units, delta space in actual units, delta space in percentage, delta space in percentage and many more format which is within the scope of present disclosure. Space for a category is measured in different formats such as linear feet, square feet, weighted visible space, cognitive visible space and many more format which is within the scope of present disclosure. It is assumed that sales of a category is related to space allocated to the category. In other words, sales of a category is related to amount of space that is visible for customers during purchase in a store and the space may be termed as visible space. Different format of category space is discussed as below:
- Linear Feet - Traditionally in retail space planning the space is measured in linear feet, and linear footage is a measurement of length of fixture or arrangement of products in a store. Linear footage measures only the length, as they represent the front space which is seen by the customer usually. Few more measures are proposed in this disclosure to overcome the limitations faced while using the measure of linear feet for different form of retailing such as electronics, apparel, and the like. The proposed measures are as follows.
- Weighted visible space - Certain racks can have more visibility than other racks of a category and weights are decided based on the amount of visibility and while calculating linear footage, weights are added to respective rack so that the rack with more visibility has more importance in deciding the total linear feet and the measure is termed as weighted visible space.
- Cognitive visible space - Visible space may be computed using cognitive computing such as image or video processing related with two- or three-dimensional space allocated to a category and used as a measure for category space and the measure is termed as cognitive visible space
- Square feet - The floor space that is occupied by a rack allocated for a category may be measured in square feet and used as a measure for category space

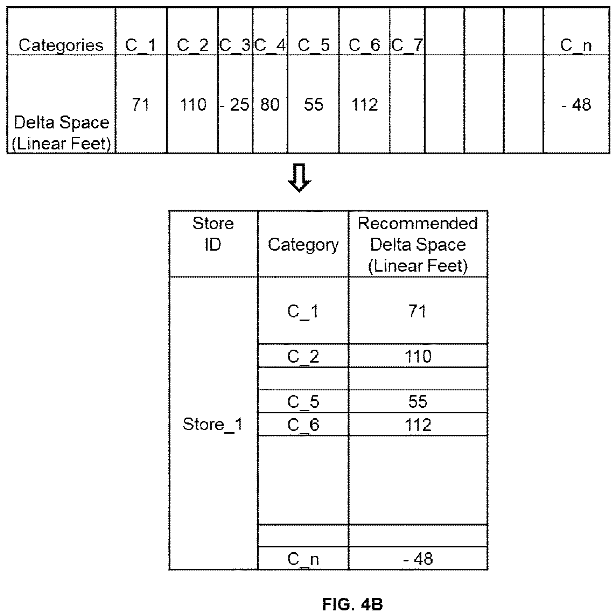

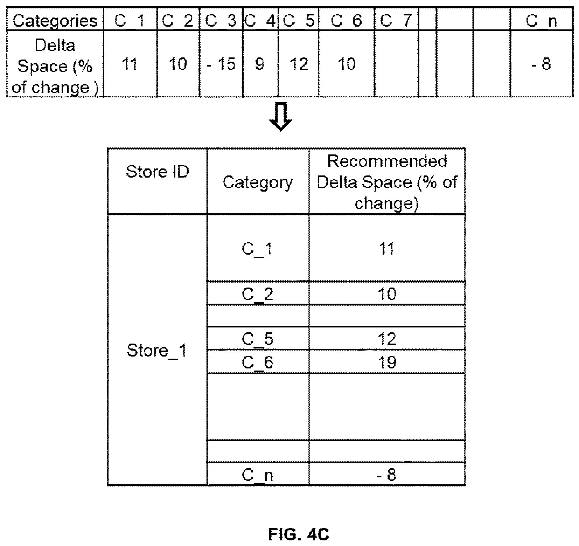

The final space allocated to each categories is processed in a single row vector format as displayed in the FIG. 4A
The delta space - The delta space is defined as the space difference between initial space occupied by the category and final space suggested by space optimization tool. Delta space may be defined in different form such as original units i.e., total additional feet, percentage of additional space as compared with initial space occupied by the category or percentage of additional space as compared with available space for the category. Here available space is decided by the optimization rules such as minimum space and maximum space for the category in which minimum space is 80 % of current space and maximum space is 120 % of current space. If the current space of a category is 500 feet and the minimum space is 400 feet and the maximum space is 600. So, the available space is 100 feet in both direction from 500 feet. If the recommended space is 570 feet, then 70 % of available space is occupied by the category. Total additional feet allocated to each categories is processed in a single row vector format as displayed in the FIG. 4B. Percentage of additional space as compared with initial space allocated to each categories is processed in a single row vector format as displayed in the FIG. 4C. Percentage of additional space as compared with available space allocated to each categories is processed in a single row vector format.

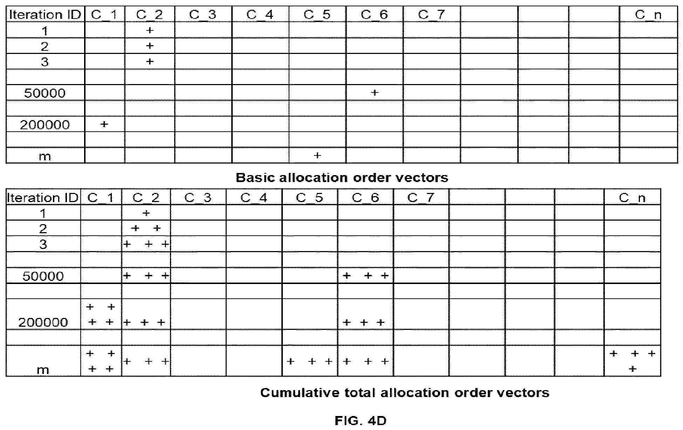

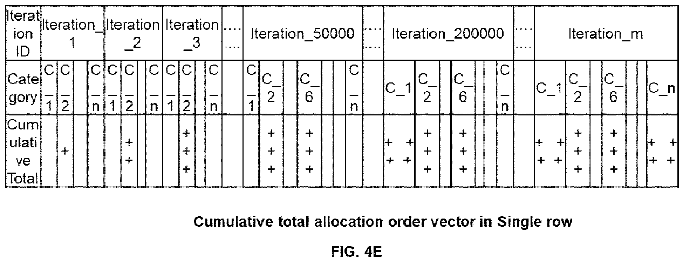

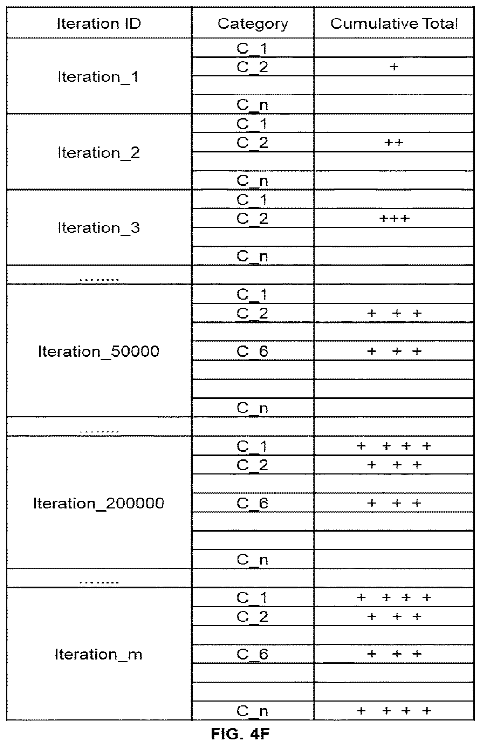

The allocation order - Log files of each store from space optimization tool are fetched. Log files of each optimization have the details of each incremental space allocation that occur during each iteration of optimization which is carried out using same business rules across stores. A log file for a store is processed into row vectors with same length noted as 'basic allocation order vectors' as displayed in FIG. 4D, 4E and 4F. Here each row vector represents an iteration of optimization, and number of row vectors is equal to number of iterations and length of each row vector is equal to number of categories of corresponding store. Each cell of the row represents a category, and value of each cell of the row represents fixed incremental space allocation for the category for an incremental foot during the iteration, for example, in the FIG. 4D, order of allocation is C2, C6, C1, in which category C2 is gaining the space first, followed by C6 and C1 etc.

Basic allocation order vector is processed by calculating cumulative totals for each iteration and termed as 'cumulative total allocation order vectors' as displayed in FIG. 4D, 4E and 4F. During progress of optimization, cumulative total is calculated for each cell by adding incremental footage gained by each cell during each iteration. Percentage of filled space by a cell takes decimal values such as 0.01, 0.02, and the range varies from 0 to 1 indicating no fill to complete fill. During progress of optimization, at any instance a cell in the matrix may have value of '0' indicating zero fill, '1' indicating complete fill and decimal values indicating percentage of filled space. Partial fill is noted with 'percentage of filled space' which is calculated by cumulative total of incremental space occupied by the cell divided by total space

Further processing is carried out by adding basic allocation order vectors or cumulative total allocation order vectors one by one to form a single row vector representing the allocation order vector in two formats namely basic allocation order vector and cumulative allocation order vector. Cumulative allocation order vector in single row is displayed in FIG. 4E.

At step 310 of the method 300, the one or more hardware processors 104 generate a plurality of space matrices, wherein each column represents the store and number of columns are equivalent to number of the plurality of stores, and wherein each row represents a category and number of rows equivalent to a number of the plurality of categories. The plurality of space matrices comprising:
a) A final space matrix, generated from the final space vector corresponding to each of the plurality of stores, by converting the format of the final space vector from a single row vector to a single column vector, and considering the plurality of the stores. Further, arranging a plurality of final space vectors of the plurality of stores into a matrix format, wherein value of each element of the column vector represents final space allocated to each of the plurality of categories; and
b) A delta space matrix, generated from the delta space vector corresponding to each of the plurality of stores, by converting format of the delta space vector from a single row vector to a single column vector, and considering the plurality of the stores and arranging a plurality of delta space vectors of the plurality of stores into a matrix format.
c) A space allocation order matrix, generated from the allocation order vector corresponding to each of the plurality of stores, by converting the allocation order vector format to a column vector format and considering the plurality of stores and arranging a plurality of allocation order vectors of the plurality of stores into a matrix format.

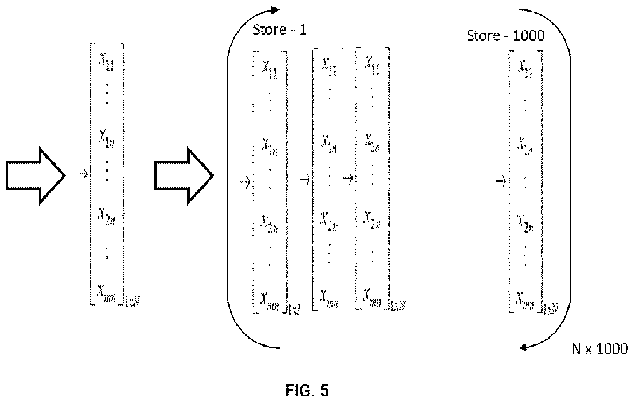

As depicted in FIG. 5, the final space matrix is generated from the final space vector by converting the format of the final space vector from a single row vector to a single column vector and considering all the stores and arranging final space vectors of all the stores into a matrix format. Value of each element of the column vector represents final space allocated to each category. In same manner, the delta space matrix is generated from the delta space vector by converting format of the delta space vector from a single row vector to a single column vector and considering all the stores and arranging delta space vectors of the stores into a matrix format. Same manner, the space allocation order matrix generated from the allocation order vector by converting the allocation order vector format to a column vector format and considering all the stores and arranging the allocation order vectors of the stores into a matrix format.

Once the three types of matrices are generated, at step 312 of the method 300, the one or more hardware processors 104, via the pattern extraction tool, process the final space matrix, the delta space matrix and the space allocation order matrix by using a plurality of formats of measurements of final space, delta space, and the space allocation order and applying standardization, a covariance matrix creation, and principal component analysis (PCA) to identify a set of patterns for each of the final space matrix, the delta space matrix and the space allocation order matrix based on eigenvectors and eigenvalues generated during the (PCA).

Each matrix undergoes into standardization, creation of covariance matrix, and principal component analysis. In an embodiment, standardization is carried out by subtracting the individual store value with mean store values i.e., each store vector is subtracted from the vector of mean value in which the vector of mean value is calculated by considering all the stores for every cell. In an embodiment, the standardized matrix includes 'N' columns and 'n' rows. As can be understood, standardization enables bringing the numeric values of each store to a common/standard scale for further processing. Standardized matrix is processed to form covariance matrix. As mentioned, the Principal component analysis (PCA) is applied on the covariance matrix to generate the set of eigenvectors with corresponding eigenvalues and factor loadings in which each eigenvector which are greater than 1 are considered as pattern. The PCA when applied on the covariance matrix generates the set of eigenvectors with corresponding eigenvalues and factor loadings. Eigenvalues decrease exponentially and those eigenvectors which are greater than 1 are considered as patterns and they are noted as set of patterns. Quality of the set of patterns is determined from variance contribution of the set of patterns of PCA.

Quality of the set of patterns = sum of variance contribution of the set of patterns or eigenvectors which are greater than1.

Each store is tagged into an underlying pattern based on factor loadings. Each underlying pattern is arrived based on common characteristics that are available across many stores. Each underlying pattern is arrived based on common characteristics across stores in terms of space optimization mechanism such as priority of space capturing by the categories, interaction between categories due to different space elasticity while capturing space by categories, simultaneous gaining of spaces by similar productivity categories to attain global optimum, and other backend mechanism that are happening during space optimization.

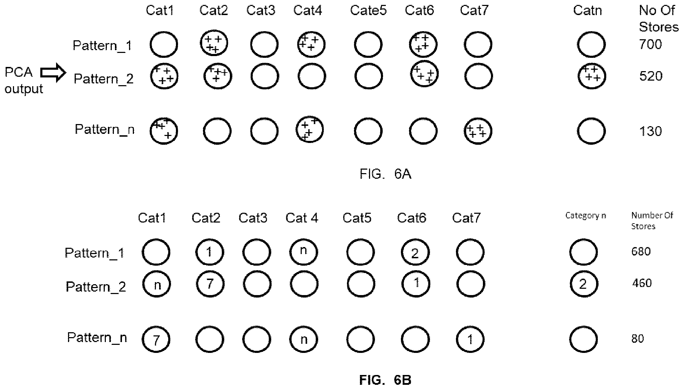

Patterns are generated based on (i) final space allocations (ii)delta space allocations and (iii) space allocation logic and based on different format of measurements. Each combination produces a set of patterns. For example, final space allocations in which the space is measured in linear feet produces one set of patterns. Final space allocations in which the space is measured in square feet produces another set of patterns. By this way, each combination resulting from (i) final space allocations under different formats (ii) delta space allocations under different formats and (iii) space allocation logic under different format produces a set of patterns individually Each set of patterns may be termed individually as 'basic patterns' or 'basic set of patterns.' FIG. 6A depicts the set of patterns generated post PCA from final space recommendation matrix and FIG. 6B depicts the set of patterns generated from space allocation order matrix. It has n patterns as a set, and the 'n' indicates that after PCA, it produced 'n' number of eigenvectors which are having eigenvalue greater than 1. With respect to FIG. 6A, first eigenvector or first pattern is formed from 700 stores. In other words, the column vectors of those 700 stores were condensed by PCA to form first pattern as those 700 stores have similar characteristics in terms of suitable format of the final space. The 700 stores are tagged into first pattern based on factor loadings of PCA. The same logic is followed for second eigenvector formation from 520 stores. Ideally the 700 stores forming first pattern should have similar characteristics and the level of similarity may be derived by comparing each store with the pattern. In other words, the column vector of the store may be compared with the pattern using Euclidean distance to measure the level of similarity. Initially the basic patterns are formed using predefined rules. The basic patterns undergo validation and further improvement through applying dynamic rules as explained in the latter part. The predefined rules may be same for across categories and across stores. Alternatively, the predefined rules may vary across categories for a store. System may decide those rules based on historical space variations for the categories. They are termed as 'ideal range of space change' for a category and it is also categorized under predefined rules. The patterns are formed by processing the final space matrix or the delta space matrix or the space allocation order matrix under different format of measurements of final space or delta space or allocation order.

Mismatch score - Once the set of patterns are generated, at step 314 of the method 300, the one or more hardware processors 104 generate a store level mismatch score by comparing existing floor plans with the set of patterns derived from each of the final space matrix, the delta space matrix, and the space allocation order matrix.

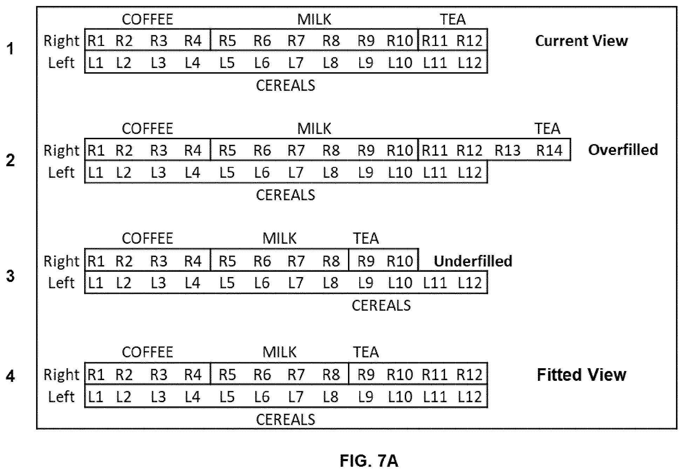

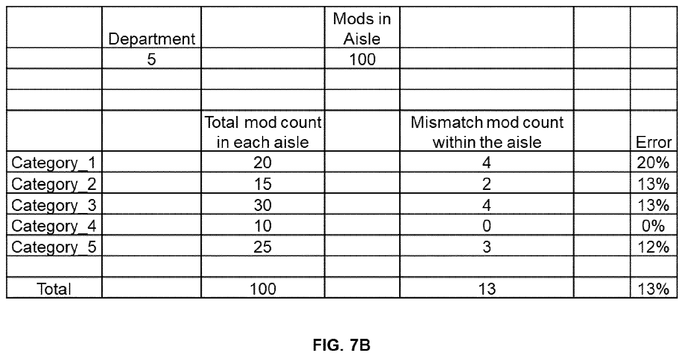

FIG. 7A depicts use case example of overfilled, underfilled, fitted aisle level view for 'Beverages' and 'Cereals' department with recommended category level (Coffee, Milk, Tea) optimized space which is arranged on both sides of aisle. FIG 7A shows a full aisle which has two sides namely right side and left side. With respect to right aisle, different possibilities are explained as follows. 1.Current view with existing space arrangement of aisle with categories, 2. Overfilled view of aisle post arranging new space recommendation for categories, 3. Underfilled view of aisle post arranging new space recommendation for categories 4. Fitted view of aisle post arranging new optimal space recommendation for categories with minimal mismatch score. As depicted in FIG. 7B, aisle mismatch score is calculated based on the extent of how the categories are underfilled or overfilled when they are fitted in mods of aisle with optimized space recommendation. Mod is section of an aisle where a category of goods is on display. Mismatch score may be calculated in many ways within the scope of present disclosure. In post optimization floor plan arrangement, store level aisle mismatch score is the ratio of number of mods resulting in underfilled or overfilled aisles to the total number of mods across all the aisles within store. Store level mismatch score may be calculated by considering the difference in space suggested by space recommendation of the tool and space available in the store. Mismatch score may be calculated by using different format of spaces such as linear feet, square feet, weighted visible space, cognitive visible space and many more format which is within the scope of present disclosure. In one instance, visible space may be defined as the space that is visible for customers during purchase in a store. Visible space may be computed using cognitive computing such as image or video processing related with two- or three-dimensional space allocated to a category and used as a measure for category space and the measure is termed as cognitive visible space. When cognitive visible space of each category is used as an input for space optimization by space optimization tool and the recommended space may be compared with visible space available in the store to derive mismatch score.

At step 316 of the method 300, the one or more hardware processors 104 perform three level of iterations in which first level iteration is performed to select a set of pattern from the patterns derived from the final space, delta space and allocation order and second level iteration is performed to ensure its fitment into the aisle of retail floors and third level iteration is done to improve quality of the patterns further. First level iteration uses predefined optimization rules and second level iteration, and third level iteration use dynamic optimization rules in real time. The three level iterations comprising:
a) A first level of iteration to select top set of patterns from the set of patterns formed from each of (i) the final space matrix (ii) the delta space matrix, and (iii) the allocation order, under different formats of final space, delta space, and allocation order and selecting a top set of pattern for a suitable format among one of the final space, the delta space and the space allocation order, wherein the quality of set of patterns is maximum for the top set of pattern.
   Quality of patterns and its significance in space planning - System uses the criteria 'quality of pattern' to identify the key mechanism or the derived information that improves pattern formation. The core may be a single factor or combination of factors. In an instance, allocation order may form better pattern than final recommendation. In other words, allocation order may differentiate stores better than space recommendation. And also, allocation order may form better pattern when cumulative total is used. Improving quality of patterns indicates that increase in density of patterns or in other words increase in the number of stores following a pattern
b) A second level of iterations to apply to set of patterns received from first level iterations in which outcome of each iteration within second level of iterations is used to locate the mismatch store using mismatch score and recalculating any one of the (i) the final space matrix (ii) the delta space matrix, and (iii) the allocation order for only located mismatching store using identified rules based on outcome of previous iteration within second level of iterations and generating set of patterns by adding new outcome received from mismatch stores for one of the recalculated (i) the final space matrix (ii) the delta space matrix, and (iii) the allocation order space and repeating the procedure until no store is deviating from the pattern in terms of aisle fitment. During each iteration of second level iteration, mismatch store is located based on store level mismatch score and optimization rules for the identified store are adjusted. The adjustment of optimization rules may be carried out in many ways within the scope of present disclosure. When a new iteration within second level iterations, is started, new sub ranges are calculated based on the mismatch score of previous iteration within second level iterations. The sub ranges are calculated for specific categories and specific stores that is identified in the previous iteration within second level iterations based on mismatch score and the sub ranges are decided based on narrowing down the mismatch score and to improve aisle fitment in quicker span of time. Here pattern is formed at each iteration by combining new outcome received from mismatch store and old outcomes present already for the remaining stores. Here old outcome refers to the outcome present before that iteration. Thus, only part of input is modified or adjusted at each iteration to enable reduction of running time for each iteration.
c) A third level of iterations to apply to set of patterns received from second level iterations in which outcome of each iteration within third level of iterations is used to locate the store which are deviating from the pattern using multivariate distances such as Euclidean distance as per equation-1 and adding new outcome received from mismatch store with old outcomes and recalculating any one of the (i) the final space matrix (ii) the delta space matrix, and (iii) the allocation order for only those deviating store using identified rules based on outcome of previous iteration within third level of iterations and generating set of patterns from the recalculated (i) the final space matrix (ii) the delta space matrix, and (iii) the allocation order space and repeating the procedure until no store is deviating from the pattern. During each iteration of third level iteration, deviating store is located based on equation 1 and optimization rules for the identified store are adjusted. The adjustment of optimization rules may be carried out in many ways within the scope of present disclosure. When a new iteration within third level iterations, is started, new sub ranges are calculated based on the difference of previous iteration within third level iterations. The sub ranges are calculated for specific categories and specific store that is identified in the previous iteration of third level iterations based on deviation and the sub ranges are decided based on narrowing down the difference and to improve quality of pattern in quicker span of time. The range will have lesser interval as compared to ideal range of space and thus leading to quicker outcome during optimization. Further details are described in later section. During third level of iterations, pattern is formed at each iteration by combining new outcome received from deviating store and old outcomes present already for the remaining stores. Here old outcome refers to the outcome present before that iteration. Thus, only part of input is modified or adjusted at each iteration to enable reduction of running time for each iteration.

Locating the deviating stores - Euclidean distance is calculated between column vector of a store and pattern followed by the store and it is repeated for all the stores following a pattern. Here the column vector of a store represents the vector which was used as input for pattern formation. The most deviating store is identified by the following equation 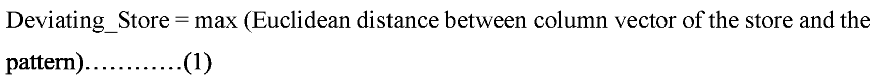 Deviating_Store = max (Euclidean distance between column vector of the store and the pattern) (1)

Based on equation (1), deviating store is identified for any of the format of the final space, the delta space, and the space allocation order.
In case of pattern derived from final space under different format, deviating category within the deviating store is identified using below equation $Deviating_category = max {\left({q}_{i}-{p}_{i}\right)}^{2}$ (2)
q - i^{th} category value in the deviating store
p - i^{th} category value in the pattern
i varies from 1 to n in which n is equal to number of categories

As per equation (2), deviating category for the deviating store is identified and used to select the category that require dynamic optimization rules. Thus, identification of deviating stores and deviating categories enable to choose the stores and categories that require fine tuning to improve quality of patterns. Thus, only part of inputs is modified or adjusted instead of applying dynamic rules across all the categories or across all the stores. Thus, the identification of deviating stores reduces overall running time of iterations.

If the first and second level of iterations give set of patterns from final space matrix, then quality of those patterns are further improved by third level of iterations using the outcome of patterns of previous iteration within third level iterations as follows.

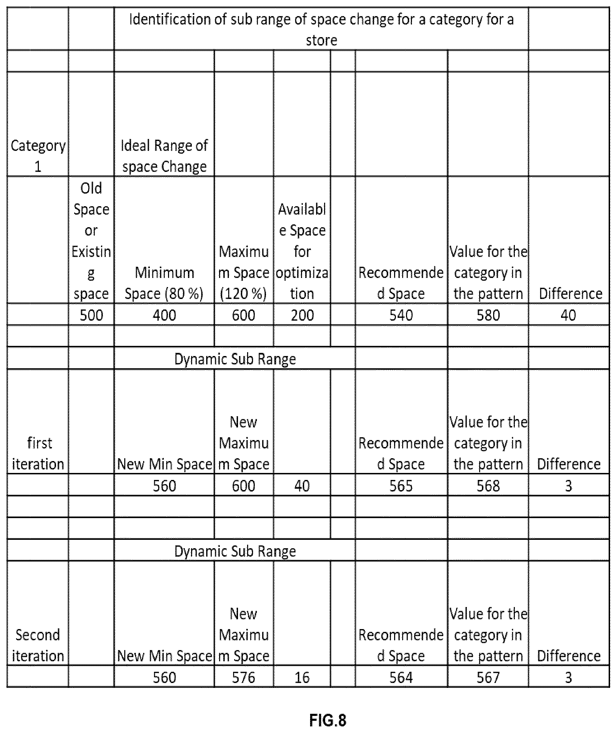

Identification of sub ranges of space change within ideal range of space change for each category for each store - Each pattern will have value for each category. The value may be final space allocations under different formats The value of each category of a pattern is used by the system to decide the new sub range of space change for a category. The value of each category of the pattern becomes as the center of new sub range and the center value is compared with upper bound and lower bound of ideal range of space change of a category or the upper bound and lower bound of sub range of space change of a category of previous iteration and the nearest one is chosen as new sub range of space change for a category. The difference between the center value and nearest boundary value act is the distance that goes on both direction from the center value. FIG. 8 shows an instance on how system identifies sub range of space change for a category for a store. As depicted in FIG. 8, the difference is 20 as the center value which is 580 is closer to 600 and thus new sub range is decided by system as 560 to 600 for the first iteration. After first iteration the center value becomes as 568 which is compared with the pair (560,600) and 560 is closer to 568 and the difference is 8 and 8 is added to 568 resulting to 576 and thus the new sub range is decided as 560 and 576. The difference between recommended space of the category for the store and recommended space of the category for the store as per the pattern is minimized. The difference may arise due to identification of common character across all the stores. Ideally the difference needs to be as less as possible so that the store and the pattern are as closer as possible. The depicted example for a category in which the difference becomes reducing in each iteration due to readjusting of minimum and maximum values. The reduction in difference indicates improving quality of patterns as the store behaves exactly similar to the pattern. When a new iteration is started, new sub ranges are calculated based on the outcome of patterns of previous iteration. The iteration continues until no further improvement in quality of patterns happens.

The range will have lesser interval as compared to ideal range of space and thus leading to quicker outcome during optimization. It is understood that optimization results vary in terms of space recommendations of categories as well as running time based on the range used for each category. If the range is higher, it will have more iterations as compared to lesser range in which number of iterations are lesser and running time will be lower. It enables to stabilize the value of category in the pattern in quicker span of time.

### Predefined optimization rules vs Dynamic optimization rules.

Predefined optimization rules -. Initially the basic patterns are formed using predefined rules. The predefined rules may be same for across categories and across stores. Alternatively, the predefined rules may vary across categories for a store. System may decide those rules based on historical space variations for the categories. They are termed as 'ideal range of space change' for a category and it is also categorized under predefined rules.

Dynamic optimization rules - The rules are decided by system based on the outcome of each iteration and adjusting of rules is done based on the outcome. In an instance, if one store is deviating from the pattern slightly, then the rules for the deviating store is adjusted towards narrowing the difference between store and the pattern and pattern is recreated using the new outcomes provided by the adjusted rule to validate for the deviation of the store. As pattern is formed from inputs from many stores, the procedure needs to be performed in an iterative way by adjusting the rules as per latest outcome. In another instance, one store may be differing from the pattern in terms of fitment into the aisle slightly, then the rules for the deviating store is adjusted towards narrowing the mismatch error between aisle of the store and the pattern. As pattern is formed from inputs from many stores, the procedure needs to be performed in an iterative way by adjusting the rules as per latest outcome. Thus, the rule is termed under dynamic optimization rules. The identification of difference between a store and the pattern may be identified in many ways within the scope of present disclosure. As an example, one approach was disclosed using Euclidean distance. The rule adjustment to narrow down the difference or mismatch score may be done in many ways within the scope of present disclosure.

At step 318 of the method 300, the one or more hardware processors 104 generate a set of floorplans and planograms in accordance with the set of patterns received from third iterations. The floorplans and planograms are recommended to each of the plurality of stores in accordance with the set of patterns received from third iterations. The set of floorplans and planograms are generated based on the set of patterns received from third iterations. The floorplans and planograms are recommended to each of the stores based on the set of patterns received from third iterations. All the stores followed or associated with a pattern are assigned with a floorplan. For example, as depicted in FIG. 4D, the order of allocation is C2, C6, etc., in which category C2 is gaining the space first, followed by C6, etc. The stores having same space allocation mechanism form a pattern. All the stores within a pattern are assigned with a floorplan. In retail terminology, remodeling of stores refers to major changes which is done for once in many years and it is usually carried out by changing floor plans and associated activities. Resetting of stores refers to minor changes which is done once in 3 months, and it is usually carried out by changing planograms and associated activities. Floor planning happens at a macro level post finalizing which the micro level planning of planogram, fixture and item into this floor space happens. Floor planning happens at the corporate level for each retail store guided by space planner, analyst, category managers and store managers. Floor planning is the process of arranging the categories within the retail store floor based on space allocated to the respective categories. As floor planning execution cannot be altered frequently and involves huge cost impact in terms of labor, procurement of infrastructure, fixtures, product inventory and other store remodel aspects, it is given utmost importance and considered as one of the primary functions of retail merchandise planning.

It becomes challenging to carry out floor planning execution at individual store wise. All the stores followed or associated with a pattern are assigned with a floorplan and thus minimization of effort involved in floor planning execution is achieved. The effort minimization is directly related to quality of patterns. Quality of the set of patterns is determined from variance contribution of the set of patterns of PCA.

All the stores followed or associated with a pattern are assigned with a planogram. For example, as depicted in FIG. 4D, the order of allocation is C2, C6, C1, etc. in which category C2 is gaining the space first, followed by C6 and C1 etc. The stores having same space allocation mechanism form a pattern. All the stores within a pattern are assigned with a planogram. A planogram is a diagram that shows how and where specific retail products should be placed on retail shelves or displays in order to increase customer purchases. It becomes challenging to carry out planogram execution at individual store wise. All the stores followed or associated with a pattern are assigned with a planogram and thus minimization of effort involved in planogram execution is achieved. Maximization of adoptability during space planning is achieved as patterns are formed from minimization of mismatch error.

During remodeling of stores, retailers need guidelines to choose the categories that need to be modified drastically and the order of allocation in pattern format gives great insight in deciding the category selection for remodeling in two ways comprising, category selection for remodeling and store selection for remodeling:
1) Category selection - Those categories which are gaining the space in the initial iterations need to be given higher priority for expansion of the category space. For example, As depicted in FIG. 4D, the order of allocation is C2, C6, C1, etc., in which category C2 is gaining the space first, followed by C6 and C1 etc. It is understood from the cumulative totals, first 3 iterations were gained by C2, and it indicates that C2 is more important category as compared to other categories as the expected sales per incremental foot is greater than any other category in the store. At the time of 50000^{th} iteration, C2 and C6 have gained space and at the time of 200000^{th} iteration, in addition to C2 and C6, C1 has gained space. As per the FIG. 4D, the order of allocation is C2, C6, C1 ...in which category C2 is gaining the space first, followed by C6 and C1 etc., and C2 needs to be given topmost priority while expansion of space for the category. C6 and C1 have next level of priority and similarly.
2) Store selection - Patterns formed from order of allocation is used to select stores that are following a specific pattern. In an instance, referring back to the FIG. 6B, n type of patterns as a set were formed. First eigenvector or first pattern is formed from 680 stores. In other words, the column vectors of those 680 stores were condensed by PCA to form first pattern as those 680 stores have similar characteristics in terms of the space allocation order. Here category 2 is gaining space followed by category 6. Second pattern is formed from 460 stores in which category 6 is gaining the space first followed by category n. So, n types of order of allocations are observed across stores. Each pattern will have unique way of order of allocation. Each pattern formed from order of allocations has different categories for the top iterations. So, the stores having those patterns have different strategies in choosing categories for remodeling.

As each pattern has information of prioritization of categories and number of stores adhering those patterns, it enables to decide the number of top categories that could be selected for remodeling of stores based on the overall budget allocated for remodeling. Thus, using the pattern, it improves overall implementation efficiency as it enables simultaneous selection of categories for remodeling and implementations for many stores by reducing overall cost and associated factors.

Reasons (set of reasons) that lead to the formation of the set of patterns received from third iterations are identified based on sales drivers associated with one or more stores. Canonical discriminant analysis is carried out between patterns tagged to each store and store sales drivers. Sales drivers are those factors which are captured at store level and influence sales of the items of the store. Few examples of sales drivers are demography, weather, etc. Sales drivers for a predefined period for a store is processed to bring in a suitable format to map with pattern ID tagged to that store. Canonical discriminant analysis is a multivariate technique, and it is concerned with determination of a linear combination of sales drivers such that the differentiation between patterns is maximum. Canonical analysis attempts to mine all possible linear combinations of sales drivers and provides top combinations in the form of canonical variable and noted as 'Canonical variable X' such that the differentiation between patterns is maximum. It enables to apply the canonical variable X to predict the expected pattern which is used for many retail strategies. In one instance when a retailer tries to open a new store in a new location during next season, canonical discriminant model is able to predict potential categories that suit for the new location. It is derived from the predicted pattern by the canonical discriminant model for the given sales drivers that is present in the trade area of new location and forecasted weather conditions for the next season.

Visualization of space allocation mechanism for a store through animation videos is enabled by using corresponding ''cumulative total allocation order vectors' as displayed in FIG. 4D, during progress of optimization, cumulative total is calculated for each cell by adding incremental footage gained by each cell during each iteration. Percentage of filled space by a cell takes decimal values such as 0.01, 0.02, and the range varies from 0 to 1 indicating no fill to complete fill. During progress of optimization, at any instance a cell in the matrix may have value of '0' indicating zero fill, '1' indicating complete fill and decimal values indicating percentage of filled space. Partial fill is noted with 'percentage of filled space'.
i. In one instance the color of cell is decided based on percentage of filled space. In one instance the cell is marked with green color and the intensity of green color is in proportion to its value. The value of '1' may have darkest green color indicating complete fill and the value of '0' may have no color or white color indicating no fill. User may be interested to locate the main iteration that cause deviation between optimization of two stores. A test store with pattern A is compared with a store with pattern B by calculating Euclidean distance for each iteration. Odd iteration/event between patterns of two stores is located with the following formulae: 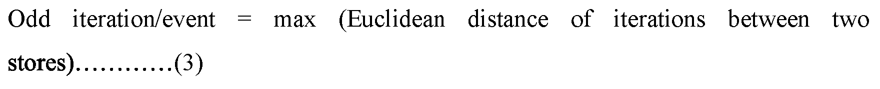 Odd iteration/event = max (Euclidean distance of iterations between two stores) (3)

Similarly, top few iterations could be selected based on magnitude of Euclidean distance. The identified iteration ids are noted in 'matrix with cumulative totals', filtered and used for animation
ii. Locating odd category within odd iteration: User may be interested to locate the main category that cause deviation between optimization of two stores.
It enables to locate the category responsible for the deviation $Odd category = max {\left({q}_{i}-{p}_{i}\right)}^{2}$ (4)
q - i^{th} category value or cell value in test store with pattern A
p - i^{th} category value or cell value in test store with pattern B, where i varies from 1 to n

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. **Also, the words "comprising," "having," "containing," and "including," and other** similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300) for space planning, the method comprising:
acquiring (302), via one or more hardware processors (104), store-data over a predefined time span from a plurality of stores;
obtaining (304), via the one or more hardware processors (104), sales, space, and demographic information from the store-data on a plurality of categories in the plurality of stores;
processing (306), the sales, space, and demographic information, via a space optimization tool implemented by the one or more hardware processors (104), to perform space optimization in accordance with a set of predefined optimization rules comprising category level optimization rules and in aisle optimization rules, to generate:
a) a plurality of final space allocations for each of the plurality of categories of each of the plurality of stores;
b) a plurality of delta space allocations for each of the plurality of categories of each of the plurality of stores, wherein a delta space is defined as a difference between an initial space occupied by a category amongst the plurality of categories and a final space suggested by the space optimization tool for the category; and
c) details on a space allocation order for the category for each incremental foot during each iteration of space optimization, by-the space optimization tool, captured in a plurality of log files for a plurality of stores;
creating (308), via the one or more hardware processors (104), a plurality of vectors comprising:
a) a final space vector capturing a final space allocation corresponding to each of the plurality of categories of a store among the plurality of stores, wherein the final space allocation corresponding to each of the plurality of stores is processed in a single row vector format as the final space vector;
b) a delta space vector capturing a delta space allocation for each of the plurality of categories for the store, wherein the delta space allocation corresponding to each of the plurality of stores is processed in a single row vector format as the delta space vector; and
c) an allocation order vector capturing order of priority in space allocation from the space allocation order across the plurality of categories for the store, wherein a log file for a store from amongst the plurality of log files is processed into a plurality of row vectors with same length noted as 'basic allocation order vectors', wherein each row vector represents an iteration of optimization-, and number of row vectors is equal to number of iterations and length of each row vector is equal to number of the plurality of categories of corresponding store, each cell of the row represents a category among the plurality of categories, and value of each cell of the row represents a fixed incremental space allocation for the category for an incremental foot during the iteration, processing of basic allocation order vectors is carried out by calculating cumulative totals for each iteration and termed as 'cumulative total allocation order vectors' and further processing is carried out by adding basic allocation order vectors or cumulative total allocation order vectors one by one to form a single row vector representing the allocation order vector in two formats namely basic allocation order vector and cumulative allocation order vector;
generating (310), via the one or more hardware processors (104), a plurality of space matrices wherein each column represents the store and number of columns are equivalent to number of the plurality of stores, and wherein each row represents a category and number of rows equivalent to a number of the plurality of categories, the plurality of space matrices comprising:
a) a final space matrix, generated from the final space vector corresponding to each of the plurality of stores, by converting the format of the final space vector from a single row vector to a single column vector, and considering the plurality of the stores and arranging a plurality of final space vectors of the plurality of stores into a matrix format, wherein value of each element of the column vector represents final space allocated to each of the plurality of categories;
b) a delta space matrix, generated from the delta space vector corresponding to each of the plurality of stores, by converting format of the delta space vector from a single row vector to a single column vector, and considering the plurality of the stores and arranging a plurality of delta space vectors of the plurality of stores into a matrix format; and
c) a space allocation order matrix, generated from the allocation order vector corresponding to each of the plurality of stores, by converting the allocation order vector format to a column vector format and considering the plurality of stores and arranging a plurality of allocation order vectors of the plurality of stores into a matrix format;
processing (312), via a pattern extraction tool implemented by the one or more hardware processors (104), the final space matrix, the delta space matrix and the space allocation order matrix by using a plurality of formats of measurements of final space, delta space, and the space allocation order and applying standardization, a covariance matrix creation, and principal component analysis 'PCA' to identify a set of patterns for each of the final space matrix, the delta space matrix and the space allocation order matrix based on eigen vectors and eigen values generated during the 'PCA', wherein standardization is performed by subtracting each store vector from a vector of mean value in which the vector of mean value is calculated by considering the plurality of the stores for each cell of the final space matrix, the delta space matrix and the space allocation order matrix, and wherein the 'PCA' is applied on the covariance matrix to generate a set of eigenvectors with corresponding eigenvalues and factor loadings in which the set of eigenvectors which are greater than 1 are considered as the set of patterns;
generating (314), via the one or more hardware processors (104), a store level mismatch score by comparing existing floor plans with the set of patterns derived from each of the final space matrix, the delta space matrix and the space allocation order matrix, and processing the set of patterns for each of the final space matrix , the delta space matrix and the space allocation order matrix under the plurality of formats of measurements of the final space, the delta space, and the space allocation order to determine quality of the set of patterns from variance contribution of the set of patterns of PCA;
performing (316), via the one or more hardware processors (104), three level iterations comprising:
a) a first level of iterations to select top set of patterns from the set of patterns formed from each of i) the final space matrix, ii) the delta space matrix, and iii) the allocation order, under different formats of final space, delta space, and allocation order and selecting a top set of pattern for a suitable format among one of the final space, the delta space, and the space allocation order, wherein the quality of set of patterns is maximum for the top set of pattern;
b) a second level of iterations to apply to set of patterns received from the first level iterations in which outcome of each iteration within second level of iterations is used to locate a mismatch store using the mismatch score and recalculating any one of the i) the final space matrix, ii) the delta space matrix, and iii) the space allocation order for only located mismatching store using identified rules based on outcome of previous iteration within second level of iterations, and generating the set of patterns by adding new outcome received from the mismatching store for one of the recalculated i) the final space matrix, ii) the delta space matrix, and iii) the space allocation order, wherein iteration continues until no store is deviating from the pattern in terms of aisle fitment; and
c) a third level of iterations applied to set of patterns received from second level iterations in which outcome of each iteration within the third level of iterations is used to locate the store deviating from the set of patterns using multivariate distance, and recalculating any one of the i) the final space matrix, ii) the delta space matrix, and iii) the allocation order for only those deviating store using identified rules based on outcome of previous iteration within third level of iterations, and generating set of patterns by adding new outcome received from the deviating store for one of the recalculated i) the final space matrix, ii) the delta space matrix, and iii) the space allocation, wherein iteration continues until no store is deviating from the pattern; and
generating (318), via the one or more hardware processors (104), a set of floorplans and planograms in accordance with the set of patterns received from third level iterations, wherein the floorplans and planograms are recommended to each of the plurality of stores in accordance with set of patterns received from third level iterations, and wherein each of the set of patterns comprise information of prioritization of categories and a number of stores adhering the set of patterns, thereby enabling to decide a number of categories with high priority for remodeling of the number of stores.

2. The method of claim 1, wherein
a) the final space is measured in the plurality of formats comprising, i) linear feet, ii) Square feet, iii) weighted visible space and iv) cognitive visible space,
b) the delta space is measured in the plurality of formats comprising, i) the delta space in square feet, ii) the delta space in percentage, calculated by proportion of the delta space as compared to old space occupied by each of the plurality of categories and iii) the delta space in percentage, calculated by proportion of delta space as compared to available space for each of the plurality of categories of each of the plurality of stores in which the available space is decided by the optimization rules such as minimum space and maximum space, and
c) the order of space occupation is represented by the plurality of formats comprising i) incremental square feet and ii) cumulative square feet.

3. The method of claim 1, wherein the set of patterns received from third iterations are accompanied with a set of reasons that lead to the formation of set of patterns based on sales drivers associated with one or more stores, and wherein visualization of space allocation mechanism for a store through animation videos is enabled by using corresponding cumulative total order vectors in which color of each cell is in proportion to cumulative total.

4. The method of claim 1, wherein set of priority categories specific to stores for different practical applications associated with remodeling of stores are identified by locating the categories that are gaining incremental space during initial iterations and identification of corresponding stores from the set of patterns derived from allocation matrix and from cumulative total order vectors of corresponding stores.

5. The method of claim 1, wherein an ideal range of space change for each category for each store is decided by considering historical number of space changes and magnitude of space changes of the categories of the stores.

6. A system (100) for space planning, the system (100) comprising:
a memory (102) storing instructions;
one or more Input/Output 'I/O' interfaces (106); and
one or more hardware processors (104) coupled to the memory (102) via the one or more I/O interfaces (106), wherein the one or more hardware processors (104) are configured by the instructions to:
acquire store-data over a predefined time span from a plurality of stores;
obtain sales, space, and demographic information from the store-data on a plurality of categories in the plurality of stores;
process the sales, space, and demographic information, via a space optimization tool implemented by the one or more hardware processors, to perform space optimization in accordance with a set of predefined optimization rules comprising category level optimization rules and in aisle optimization rules, to generate:
a) a plurality of final space allocations for each of the plurality of categories of each of the plurality of stores;
b) a plurality of delta space allocations for each of the plurality of categories of each of the plurality of stores, wherein a delta space is defined as a difference between an initial space occupied by a category amongst the plurality of categories and a final space suggested by the space optimization tool for the category; and
c) details on a space allocation order for the category for each incremental foot during each iteration of space optimization, bythe space optimization tool, captured in a plurality of log files for a plurality of stores;
create a plurality of vectors comprising:
a) a final space vector capturing a final space allocation corresponding to each of the plurality of categories of a store among the plurality of stores, wherein the final space allocation corresponding to each of the plurality of stores is processed in a single row vector format as the final space vector;
b) a delta space vector capturing a delta space allocation for each of the plurality of categories for the store, wherein the delta space allocation corresponding to each of the plurality of stores is processed in a single row vector format as the delta space vector; and
c) an allocation order vector capturing order of priority in space allocation from the space allocation order across the plurality of categories for the store, wherein a log file for a store from amongst the plurality of log files is processed into a plurality of row vectors with same length noted as 'basic allocation order vectors', wherein each row vector represents an iteration of optimization, and number of row vectors is equal to number of iterations and length of each row vector is equal to number of the plurality of categories of corresponding store, each cell of the row represents a category among the plurality of categories, and value of each cell of the row represents a fixed incremental space allocation for the category for an incremental foot during the iteration, processing of basic allocation order vectors is carried out by calculating cumulative totals for each iteration and termed as 'cumulative total allocation order vectors' and further processing is carried out by adding basic allocation order vectors or cumulative total allocation order vectors one by one to form a single row vector representing the allocation order vector in two formats namely basic allocation order vector and cumulative allocation order vector;
generate a plurality of space matrices wherein each column represents the store and number of columns are equivalent to number of the plurality of stores, and wherein each row represents a category and number of rows equivalent to a number of the plurality of categories, the plurality of space matrices comprising:
a) a final space matrix, generated from the final space vector corresponding to each of the plurality of stores, by converting the format of the final space vector from a single row vector to a single column vector, and considering the plurality of the stores and arranging a plurality of final space vectors of the plurality of stores into a matrix format, wherein value of each element of the column vector represents final space allocated to each of the plurality of categories; and
b) a delta space matrix, generated from the delta space vector corresponding to each of the plurality of stores, by converting format of the delta space vector from a single row vector to a single column vector, and considering the plurality of the stores and arranging a plurality of delta space vectors of the plurality of stores into a matrix format; and
c) a space allocation order matrix, generated from the allocation order vector corresponding to each of the plurality of stores, by converting the allocation order vector format to a column vector format and considering the plurality of stores and arranging a plurality of allocation order vectors of the plurality of stores into a matrix format;
process via a pattern extraction tool implemented by the one or more hardware processors the final space matrix, the delta space matrix and the space allocation order matrix by using a plurality of formats of measurements of final space, delta space, and the space allocation order and applying standardization, a covariance matrix creation, and principal component analysis 'PCA' to identify a set of patterns for each of the final space matrix, the delta space matrix and the space allocation order matrix based on eigen vectors and eigen values generated during the 'PCA', wherein standardization is performed by subtracting each store vector from a vector of mean value in which the vector of mean value is calculated by considering the plurality of the stores for each cell of the final space matrix, the delta space matrix and the space allocation order matrix, and wherein the 'PCA' is applied on the covariance matrix to generate a set of eigenvectors with corresponding eigenvalues and factor loadings in which the set of eigenvectors which are greater than 1 are considered as the set of patterns;
generate a store level mismatch score by comparing existing floor plans with the set of patterns derived from each of the final space matrix, the delta space matrix and the space allocation order matrix, and processing the set of patterns for each of the final space matrix , the delta space matrix and the space allocation order matrix under the plurality of formats of measurements of the final space, the delta space, and the space allocation order to determine quality of the set of patterns from variance contribution of the set of patterns of PCA;
perform three level iterations comprising:
a) a first level of iterations to select top set of patterns from the set of patterns formed from each of i) the final space matrix, ii) the delta space matrix, and iii) the allocation order, under different formats of final space, delta space, and allocation order and selecting a top set of pattern for a suitable format among one of the final space, the delta space, and the space allocation order, wherein the quality of set of patterns is maximum for the top set of pattern;
b) a second level of iterations to apply to set of patterns received from the first level iterations in which outcome of each iteration within second level of iterations is used to locate a mismatch store using the mismatch score and recalculating any one of the i) the final space matrix, ii) the delta space matrix, and iii) the space allocation order for only located mismatching store using identified rules based on outcome of previous iteration within second level of iterations, and generating the set of patterns by adding new outcome received from the mismatching store for one of the recalculated i) the final space matrix, ii) the delta space matrix, and iii) the space allocation order, wherein iteration continues until no store is deviating from the pattern in terms of aisle fitment; and
c) a third level of iterations applied to set of patterns received from second level iterations in which outcome of each iteration within the third level of iterations is used to locate the store deviating from the set of patterns using multivariate distance, and recalculating any one of the i) the final space matrix, ii) the delta space matrix, and iii) the allocation order for only those deviating store using identified rules based on outcome of previous iteration within third level of iterations, and generating set of patterns by adding new outcome received from the deviating store for one of the recalculated i) the final space matrix, ii) the delta space matrix, and iii) the space allocation, wherein iteration continues until no store is deviating from the pattern; and
generate a set of floorplans and planograms in accordance with the set of patterns received from third level iterations, wherein the floorplans and planograms are recommended to each of the plurality of stores in accordance with set of patterns received from third level iterations, and wherein each of the set of patterns comprise information of prioritization of categories and a number of stores adhering the set of patterns, thereby enabling to decide a number of categories with high priority for remodeling of the number of stores.

7. The system of claim 6, wherein
a) the final space is measured in the plurality of formats comprising, i) linear feet, ii) Square feet, iii) weighted visible space and iv. cognitive visible space,
b) the delta space is measured in the plurality of formats comprising, i) the delta space in square feet, ii) the delta space in percentage, calculated by proportion of the delta space as compared to old space occupied by each of the plurality of categories and iii) the delta space in percentage, calculated by proportion of delta space as compared to available space for each of the plurality of categories of each of the plurality of stores in which the available space is decided by the optimization rules such as minimum space and maximum space, and
c) the order of space occupation is represented by the plurality of formats comprising i) incremental square feet and ii) cumulative square feet.

8. The system of claim 6, wherein the set of patterns received from third iterations are accompanied with a set of reasons that lead to the formation of set of patterns based on sales drivers associated with one or more stores, and wherein visualization of space allocation mechanism for a store through animation videos is enabled by using corresponding cumulative total order vectors in which color of each cell is in proportion to cumulative total.

9. The system of claim 6, wherein set of priority categories specific to stores for different practical applications associated with remodeling of stores are identified by locating the categories that are gaining incremental space during initial iterations and identification of corresponding stores from the set of patterns derived from allocation matrix and from cumulative total order vectors of corresponding stores.

10. The system of claim 6, wherein an ideal range of space change for each category for each store is decided by considering historical number of space changes and magnitude of space changes of the categories of the stores.

11. One or more non-transitory machine-readable information storage mediums comprising one or more instructions which when executed by one or more hardware processors (104) cause:
acquiring store-data over a predefined time span from a plurality of stores;
obtaining sales, space, and demographic information from the store-data on a plurality of categories in the plurality of stores;
processing the sales, space, and demographic information, via a space optimization tool implemented by the one or more hardware processors, to perform space optimization in accordance with a set of predefined optimization rules comprising category level optimization rules and in aisle optimization rules, to generate:
a) a plurality of final space allocations for each of the plurality of categories of each of the plurality of stores;
b) a plurality of delta space allocations for each of the plurality of categories of each of the plurality of stores, wherein a delta space is defined as a difference between an initial space occupied by a category amongst the plurality of categories and a final space suggested by the space optimization tool for the category; and
c) details on a space allocation order for the category for each incremental foot during each iteration of space optimization, bythe space optimization tool, captured in a plurality of log files for a plurality of stores;
creating a plurality of vectors comprising:
a) a final space vector capturing a final space allocation corresponding to each of the plurality of categories of a store among the plurality of stores, wherein the final space allocation corresponding to each of the plurality of stores is processed in a single row vector format as the final space vector;
b) a delta space vector capturing a delta space allocation for each of the plurality of categories for the store, wherein the delta space allocation corresponding to each of the plurality of stores is processed in a single row vector format as the delta space vector; and
c) an allocation order vector capturing order of priority in space allocation from the space allocation order across the plurality of categories for the store, wherein a log file for a store from amongst the plurality of log files is processed into a plurality of row vectors with same length noted as 'basic allocation order vectors', wherein each row vector represents an iteration of optimization-, and number of row vectors is equal to number of iterations and length of each row vector is equal to number of the plurality of categories of corresponding store, each cell of the row represents a category among the plurality of categories, and value of each cell of the row represents a fixed incremental space allocation for the category for an incremental foot during the iteration, processing of basic allocation order vectors is carried out by calculating cumulative totals for each iteration and termed as 'cumulative total allocation order vectors' and further processing is carried out by adding basic allocation order vectors or cumulative total allocation order vectors one by one to form a single row vector representing the allocation order vector in two formats namely basic allocation order vector and cumulative allocation order vector;
generating a plurality of space matrices wherein each column represents the store and number of columns are equivalent to number of the plurality of stores, and wherein each row represents a category and number of rows equivalent to a number of the plurality of categories, the plurality of space matrices comprising:
a) a final space matrix, generated from the final space vector corresponding to each of the plurality of stores, by converting the format of the final space vector from a single row vector to a single column vector, and considering the plurality of the stores and arranging a plurality of final space vectors of the plurality of stores into a matrix format, wherein value of each element of the column vector represents final space allocated to each of the plurality of categories;
b) a delta space matrix, generated from the delta space vector corresponding to each of the plurality of stores, by converting format of the delta space vector from a single row vector to a single column vector, and considering the plurality of the stores and arranging a plurality of delta space vectors of the plurality of stores into a matrix format; and
c) a space allocation order matrix, generated from the allocation order vector corresponding to each of the plurality of stores, by converting the allocation order vector format to a column vector format and considering the plurality of stores and arranging a plurality of allocation order vectors of the plurality of stores into a matrix format;
processing, via a pattern extraction tool, the final space matrix, the delta space matrix and the space allocation order matrix by using a plurality of formats of measurements of final space, delta space, and the space allocation order and applying standardization, a covariance matrix creation, and principal component analysis 'PCA' to identify a set of patterns for each of the final space matrix, the delta space matrix and the space allocation order matrix based on eigen vectors and eigen values generated during the 'PCA', wherein standardization is performed by subtracting each store vector from a vector of mean value in which the vector of mean value is calculated by considering the plurality of the stores for each cell of the final space matrix, the delta space matrix and the space allocation order matrix, and wherein the 'PCA' is applied on the covariance matrix to generate a set of eigenvectors with corresponding eigenvalues and factor loadings in which the set of eigenvectors which are greater than 1 are considered as the set of patterns;
generating a store level mismatch score by comparing existing floor plans with the set of patterns derived from each of the final space matrix, the delta space matrix and the space allocation order matrix, and processing the set of patterns for each of the final space matrix , the delta space matrix and the space allocation order matrix under the plurality of formats of measurements of the final space, the delta space, and the space allocation order to determine quality of the set of patterns from variance contribution of the set of patterns of PCA;
performing three level iterations comprising:
a) a first level of iterations to select top set of patterns from the set of patterns formed from each of i) the final space matrix, ii) the delta space matrix, and iii) the allocation order, under different formats of final space, delta space, and allocation order and selecting a top set of pattern for a suitable format among one of the final space, the delta space, and the space allocation order, wherein the quality of set of patterns is maximum for the top set of pattern;
b) a second level of iterations to apply to set of patterns received from the first level iterations in which outcome of each iteration within second level of iterations is used to locate a mismatch store using the mismatch score and recalculating any one of the i) the final space matrix, ii) the delta space matrix, and iii) the space allocation order for only located mismatching store using identified rules based on outcome of previous iteration within second level of iterations, and generating the set of patterns by adding new outcome received from the mismatching store for one of the recalculated i) the final space matrix, ii) the delta space matrix, and iii) the space allocation order, wherein iteration continues until no store is deviating from the pattern in terms of aisle fitment; and
c) a third level of iterations applied to set of patterns received from second level iterations in which outcome of each iteration within the third level of iterations is used to locate the store deviating from the set of patterns using multivariate distance, and recalculating any one of the i) the final space matrix, ii) the delta space matrix, and iii) the allocation order for only those deviating store using identified rules based on outcome of previous iteration within third level of iterations, and generating set of patterns by adding new outcome received from the deviating store for one of the recalculated i) the final space matrix, ii) the delta space matrix, and iii) the space allocation, wherein iteration continues until no store is deviating from the pattern; and
generating a set of floorplans and planograms in accordance with the set of patterns received from third level iterations, wherein the floorplans and planograms are recommended to each of the plurality of stores in accordance with set of patterns received from third level iterations, and wherein each of the set of patterns comprise information of prioritization of categories and a number of stores adhering the set of patterns, thereby enabling to decide a number of categories with high priority for remodeling of the number of stores.

12. The one or more non-transitory machine-readable information storage mediums of claim 11, wherein
a) the final space is measured in the plurality of formats comprising, i) linear feet, ii) Square feet, iii) weighted visible space and iv) cognitive visible space,
b) the delta space is measured in the plurality of formats comprising, i) the delta space in square feet, ii) the delta space in percentage, calculated by proportion of the delta space as compared to old space occupied by each of the plurality of categories and iii) the delta space in percentage, calculated by proportion of delta space as compared to available space for each of the plurality of categories of each of the plurality of stores in which the available space is decided by the optimization rules such as minimum space and maximum space, and
c) the order of space occupation is represented by the plurality of formats comprising i) incremental square feet and ii) cumulative square feet.

13. The one or more non-transitory machine-readable information storage mediums of claim 11, wherein the set of patterns received from third iterations are accompanied with a set of reasons that lead to the formation of set of patterns based on sales drivers associated with one or more stores, and wherein visualization of space allocation mechanism for a store through animation videos is enabled by using corresponding cumulative total order vectors in which color of each cell is in proportion to cumulative total.

14. The one or more non-transitory machine-readable information storage mediums of claim 11, wherein set of priority categories specific to stores for different practical applications associated with remodeling of stores are identified by locating the categories that are gaining incremental space during initial iterations and identification of corresponding stores from the set of patterns derived from allocation matrix and from cumulative total order vectors of corresponding stores.

15. The one or more non-transitory machine-readable information storage mediums of claim 11, wherein an ideal range of space change for each category for each store is decided by considering historical number of space changes and magnitude of space changes of the categories of the stores.

## Patentansprüche

1. Prozessorimplementiertes Verfahren (300) zur Raumplanung, wobei das Verfahren Folgendes umfasst:
Erfassen (302), über einen oder mehrere Hardwareprozessoren (104), von Speicherdaten über eine vordefinierte Zeitspanne von einer Mehrzahl von Speichern;
Erhalten (304), über den einen oder die mehreren Hardwareprozessoren (104), von Verkaufs-, Raum- und demografischen Informationen aus den Speicherdaten über eine Mehrzahl von Kategorien in der Mehrzahl von Speichern;
Verarbeiten (306) der Verkaufs-, Raum- und demografischen Informationen über ein Raumoptimierungswerkzeug, das durch den einen oder die mehreren Hardwareprozessoren (104) implementiert wird, um eine Raumoptimierung in Übereinstimmung mit einem Satz von vordefinierten Optimierungsregeln durchzuführen, die Kategorienebenen-Optimierungsregeln und In-Gang-Optimierungsregeln umfassen, um Folgendes zu erzeugen:
a) eine Mehrzahl von endgültigen Raumzuweisungen für jede der Mehrzahl von Kategorien von jedem der Mehrzahl von Speichern;
b) eine Mehrzahl von Delta-Raumzuweisungen für jede der Mehrzahl von Kategorien von jedem der Mehrzahl von Speichern, wobei ein Delta-Raum als eine Differenz zwischen einem anfänglichen Raum, der durch eine Kategorie unter der Mehrzahl von Kategorien belegt ist, und einem endgültigen Raum, der durch das Raumoptimierungswerkzeug für die Kategorie vorgeschlagen wird, definiert ist; und
c) Einzelheiten zu einer Raumzuweisungsreihenfolge für die Kategorie für jeden inkrementellen Fuß während jeder Iteration der Raumoptimierung durch das Raumoptimierungswerkzeug, die in einer Mehrzahl von Protokolldateien für eine Mehrzahl von Speichern erfasst wird;
Erzeugen (308), über den einen oder die mehreren Hardwareprozessoren (104), einer Mehrzahl von Vektoren, die Folgendes umfassen:
a) einen endgültigen Raumvektor, der eine endgültige Raumzuweisung erfasst, die jeder der Mehrzahl von Kategorien eines Speichers unter der Mehrzahl von Speichern entspricht, wobei die endgültige Raumzuweisung, die jedem der Mehrzahl von Speichern entspricht, in einem Einzelzeilenvektorformat als der endgültige Raumvektor verarbeitet wird;
b) einen Delta-Raumvektor, der eine Delta-Raumzuweisung für jede der Mehrzahl von Kategorien für den Speicher erfasst, wobei die Delta-Raumzuweisung, die jedem der Mehrzahl von Speichern entspricht, in einem Einzelzeilenvektorformat als der Delta-Raumvektor verarbeitet wird; und
c) einen Zuweisungsreihenfolgevektor, der die Reihenfolge der Priorität bei der Raumzuweisung aus der Raumzuweisungsreihenfolge über die Mehrzahl von Kategorien für den Speicher erfasst, wobei eine Protokolldatei für einen Speicher aus der Mehrzahl von Protokolldateien in eine Mehrzahl von Zeilenvektoren mit derselben Länge verarbeitet wird, die als "Basiszuweisungsreihenfolgevektoren" angegeben sind, wobei jeder Zeilenvektor eine Iteration der Optimierung repräsentiert und die Anzahl der Zeilenvektoren gleich der Anzahl der Iterationen ist und die Länge jedes Zeilenvektors gleich der Anzahl der Mehrzahl von Kategorien des entsprechenden Speichers ist, wobei jede Zelle der Zeile eine Kategorie unter der Mehrzahl von Kategorien repräsentiert und der Wert jeder Zelle der Zeile eine feste inkrementelle Raumzuweisung für die Kategorie für einen inkrementellen Fuß während der Iteration repräsentiert, wobei die Verarbeitung der Basiszuweisungsreihenfolgevektoren durch Berechnen kumulativer Summen für jede Iteration ausgeführt wird und als "kumulative Gesamtzuweisungsreihenfolgevektoren" bezeichnet wird und die weitere Verarbeitung durch Addieren der Basiszuweisungsreihenfolgevektoren oder der kumulativen Gesamtzuweisungsreihenfolgevektoren nacheinander ausgeführt wird, um einen Einzelzeilenvektor zu bilden, der den Zuweisungsreihenfolgevektor in zwei Formaten repräsentiert, nämlich dem Basiszuweisungsreihenfolgevektor und dem kumulativen Zuweisungsreihenfolgevektor;
Erzeugen (310), über den einen oder die mehreren Hardwareprozessoren (104), einer Mehrzahl von Raummatrizen, wobei jede Spalte den Speicher repräsentiert und die Anzahl der Spalten der Anzahl der Mehrzahl von Speichern entspricht und wobei jede Zeile eine Kategorie und die Anzahl der Zeilen repräsentiert, die einer Anzahl der Mehrzahl von Kategorien entspricht, wobei die Mehrzahl von Raummatrizen Folgendes umfasst:
a) eine endgültige Raummatrix, die aus dem endgültigen Raumvektor erzeugt wird, der jedem der Mehrzahl von Speichern entspricht, durch Umwandeln des Formats des endgültigen Raumvektors von einem Einzelzeilenvektor in einen Einzelspaltenvektor und Berücksichtigen der Mehrzahl der Speicher und Anordnen einer Mehrzahl von endgültigen Raumvektoren der Mehrzahl von Speichern in einem Matrixformat, wobei der Wert jedes Elements des Spaltenvektors den endgültigen Raum repräsentiert, der jeder der Mehrzahl von Kategorien zugewiesen ist;
b) eine Delta-Raummatrix, die aus dem Delta-Raumvektor erzeugt wird, der jedem der Mehrzahl von Speichern entspricht, durch Umwandeln des Formats des Delta-Raumvektors von einem Einzelzeilenvektor in einen Einzelspaltenvektor und Berücksichtigen der Mehrzahl der Speicher und Anordnen einer Mehrzahl von Delta-Raumvektoren der Mehrzahl von Speichern in einem Matrixformat; und
c) eine Raumzuweisungsreihenfolgematrix, die aus dem Zuweisungsreihenfolgevektor erzeugt wird, der jedem der Mehrzahl von Speichern entspricht, durch Umwandeln des Zuweisungsreihenfolgevektorformats in ein Spaltenvektorformat und Berücksichtigen der Mehrzahl von Speichern und Anordnen einer Mehrzahl von Zuweisungsreihenfolgevektoren der Mehrzahl von Speichern in einem Matrixformat;
Verarbeiten (312), über ein Musterextraktionswerkzeug, das durch den einen oder die mehreren Hardwareprozessoren (104) implementiert wird, der endgültigen Raummatrix, der Delta-Raummatrix und der Raumzuweisungsreihenfolgematrix durch Verwenden einer Mehrzahl von Formaten von Messungen des endgültigen Raums, des Delta-Raums und der Raumzuweisungsreihenfolge und Anwenden der Standardisierung, einer Kovarianzmatrixerzeugung und der Hauptkomponentenanalyse "PCA", um einen Satz von Mustern für jede der endgültigen Raummatrix, der Delta-Raummatrix und der Raumzuweisungsreihenfolgematrix basierend auf Eigenvektoren und Eigenwerten zu identifizieren, die während der "PCA" erzeugt werden;
Erzeugen (314), über den einen oder die mehreren Hardwareprozessoren (104), einer Speicherebenen-Fehlanpassungsbewertung durch Vergleichen existierender Grundrisse mit dem Satz von Mustern, die von jeder der endgültigen Raummatrix, der Delta-Raummatrix und der Raumzuweisungsreihenfolgematrix abgeleitet sind, und Verarbeiten des Satzes von Mustern für jede der endgültigen Raummatrix, der Delta-Raummatrix und der Raumzuweisungsreihenfolgematrix unter der Mehrzahl von Formaten von Messungen des endgültigen Raums, des Delta-Raums und der Raumzuweisungsreihenfolge, um die Qualität des Satzes von Mustern aus dem Varianzbeitrag des Satzes von Mustern der PCA zu bestimmen;
Durchführen (316), über den einen oder die mehreren Hardwareprozessoren (104), von Dreiebeneniterationen, die Folgendes umfassen:
a) eine erste Ebene von Iterationen zum Auswählen des obersten Satzes von Mustern aus dem Satz von Mustern, der aus jedem von i) der endgültigen Raummatrix, ii) der Delta-Raummatrix und iii) der Zuweisungsreihenfolge gebildet ist, unter verschiedenen Formaten des endgültigen Raums, des Delta-Raums und der Zuweisungsreihenfolge und Auswählen eines obersten Satzes von Mustern für ein geeignetes Format unter einem des endgültigen Raums, des Delta-Raums und der Raumzuweisungsreihenfolge, wobei die Qualität des Satzes von Mustern für den obersten Satz von Mustern maximal ist;
b) eine zweite Ebene von Iterationen zum Anwenden auf den Satz von Mustern, der von den Iterationen der ersten Ebene empfangen wird, wobei das Ergebnis jeder Iteration innerhalb der zweiten Ebene von Iterationen verwendet wird, um einen Fehlanpassungsspeicher unter Verwendung der Fehlanpassungsbewertung zu lokalisieren und eines von i) der endgültigen Raummatrix, ii) der Delta-Raummatrix und iii) der Raumzuweisungsreihenfolge für nur lokalisierten Fehlanpassungsspeicher unter Verwendung von identifizierten Regeln basierend auf dem Ergebnis der vorherigen Iteration innerhalb der zweiten Ebene von Iterationen neu zu berechnen, und Erzeugen des Satzes von Mustern durch Hinzufügen eines neuen Ergebnisses, das von dem Fehlanpassungsspeicher für eines der neu berechneten i) der endgültigen Raummatrix, ii) der Delta-Raummatrix und iii) der Raumzuweisungsreihenfolge empfangen wird, wobei die Iteration fortgesetzt wird, bis kein Speicher von dem Muster in Bezug auf die Ganganpassung abweicht; und
c) eine dritte Ebene von Iterationen, die auf den Satz von Mustern angewendet wird, der von den Iterationen der zweiten Ebene empfangen wird, wobei das Ergebnis jeder Iteration innerhalb der dritten Ebene von Iterationen verwendet wird, um den Speicher, der von dem Satz von Mustern abweicht, unter Verwendung eines multivariaten Abstands zu lokalisieren und eines von i) der endgültigen Raummatrix, ii) der Delta-Raummatrix und iii) der Zuweisungsreihenfolge für nur diesen abweichenden Speicher unter Verwendung von identifizierten Regeln basierend auf dem Ergebnis der vorherigen Iteration innerhalb der dritten Ebene von Iterationen neu zu berechnen, und Erzeugen des Satzes von Mustern durch Hinzufügen eines neuen Ergebnisses, das von dem abweichenden Speicher für eines der neu berechneten i) der endgültigen Raummatrix, ii) der Delta-Raummatrix und iii) der Raumzuweisung empfangen wird, wobei die Iteration fortgesetzt wird, bis kein Speicher von dem Muster abweicht; und
Erzeugen (318), über den einen oder die mehreren Hardwareprozessoren (104), eines Satzes von Grundrissen und Planogrammen gemäß dem Satz von Mustern, der von den Iterationen der dritten Ebene empfangen wird, wobei die Grundrisse und Planogramme jedem der Mehrzahl von Speichern gemäß dem Satz von Mustern empfohlen werden, der von den Iterationen der dritten Ebene empfangen wird.

2. Verfahren nach Anspruch 1, wobei
a) der endgültige Raum in der Mehrzahl von Formaten gemessen wird, die i) lineare Füße, ii) quadratische Füße, iii) gewichteten sichtbaren Raum und iv) kognitiven sichtbaren Raum umfassen,
b) der Delta-Raum in der Mehrzahl von Formaten gemessen wird, die i) den Delta-Raum in quadratischen Füßen, ii) den Delta-Raum in Prozent, berechnet durch den Anteil des Delta-Raums im Vergleich zu altem Raum, der von jeder der Mehrzahl von Kategorien belegt ist, und iii) den Delta-Raum in Prozent, berechnet durch den Anteil des Delta-Raums im Vergleich zu verfügbarem Raum für jede der Mehrzahl von Kategorien von jedem der Mehrzahl von Speichern, in denen der verfügbare Raum durch die Optimierungsregeln wie minimaler Raum und maximaler Raum entschieden wird, umfassen, und
c) die Reihenfolge der Raumbelegung durch die Mehrzahl von Formaten dargestellt wird, die i) inkrementelle quadratische Füße und ii) kumulative quadratische Füße umfassen.

3. Verfahren nach Anspruch 1, wobei der Satz von Mustern, der von den dritten Iterationen empfangen wird, mit einem Satz von Gründen begleitet wird, die zur Bildung des Satzes von Mustern basierend auf Verkaufstreibern führen, die einem oder mehreren Speichern zugeordnet sind, und wobei die Visualisierung des Raumzuweisungsmechanismus für einen Speicher durch Animationsvideos durch Verwenden entsprechender Vektoren der kumulativen Gesamtordnung, in denen die Farbe jeder Zelle proportional zur kumulativen Gesamtordnung ist, ermöglicht wird.

4. Verfahren nach Anspruch 1, wobei ein Satz von Prioritätskategorien, die spezifisch für Speicher für verschiedene praktische Anwendungen sind, die der Umgestaltung von Speichern zugeordnet sind, durch Lokalisieren der Kategorien, die während anfänglicher Iterationen inkrementellen Raum gewinnen, und Identifizieren entsprechender Speicher aus dem Satz von Mustern, die aus der Zuordnungsmatrix und aus Vektoren der kumulativen Gesamtordnung entsprechender Speicher abgeleitet werden, identifiziert wird.

5. Verfahren nach Anspruch 1, wobei ein idealer Bereich der Raumänderung für jede Kategorie für jeden Speicher unter Berücksichtigung der historischen Anzahl von Raumänderungen und der Größe von Raumänderungen der Kategorien der Speicher entschieden wird.

6. System (100) zur Raumplanung, wobei das System (100) Folgendes umfasst:
einen Speicher (102), der Anweisungen speichert;
eine oder mehrere Eingabe/Ausgabe-Schnittstellen (E/A-Schnittstellen) (106); und
einen oder mehrere Hardwareprozessoren (104), die über die eine oder die mehreren E/A-Schnittstellen (106) mit dem Speicher (102) gekoppelt sind, wobei der eine oder die mehreren Hardwareprozessoren (104) durch die Anweisungen konfiguriert sind zum:
Erfassen von Speicherdaten über eine vordefinierte Zeitspanne von einer Mehrzahl von Speichern;
Erhalten von Verkaufs-, Raum- und demografischen Informationen aus den Speicherdaten über eine Mehrzahl von Kategorien in der Mehrzahl von Speichern;
Verarbeiten der Verkaufs-, Raum- und demografischen Informationen über ein Raumoptimierungswerkzeug, das durch den einen oder die mehreren Hardwareprozessoren implementiert wird, um eine Raumoptimierung in Übereinstimmung mit einem Satz von vordefinierten Optimierungsregeln durchzuführen, die Kategorienebenen-Optimierungsregeln und In-Gang-Optimierungsregeln umfassen, um Folgendes zu erzeugen:
a) eine Mehrzahl von endgültigen Raumzuweisungen für jede der Mehrzahl von Kategorien von jedem der Mehrzahl von Speichern;
b) eine Mehrzahl von Delta-Raumzuweisungen für jede der Mehrzahl von Kategorien von jedem der Mehrzahl von Speichern, wobei ein Delta-Raum als eine Differenz zwischen einem anfänglichen Raum, der durch eine Kategorie unter der Mehrzahl von Kategorien belegt ist, und einem endgültigen Raum, der durch das Raumoptimierungswerkzeug für die Kategorie vorgeschlagen wird, definiert ist; und
c) Einzelheiten zu einer Raumzuweisungsreihenfolge für die Kategorie für jeden inkrementellen Fuß während jeder Iteration der Raumoptimierung durch das Raumoptimierungswerkzeug, die in einer Mehrzahl von Protokolldateien für eine Mehrzahl von Speichern erfasst wird;
Erzeugen einer Mehrzahl von Vektoren, die Folgendes umfassen:
a) einen endgültigen Raumvektor, der eine endgültige Raumzuweisung erfasst, die jeder der Mehrzahl von Kategorien eines Speichers unter der Mehrzahl von Speichern entspricht, wobei die endgültige Raumzuweisung, die jedem der Mehrzahl von Speichern entspricht, in einem Einzelzeilenvektorformat als der endgültige Raumvektor verarbeitet wird;
b) einen Delta-Raumvektor, der eine Delta-Raumzuweisung für jede der Mehrzahl von Kategorien für den Speicher erfasst, wobei die Delta-Raumzuweisung, die jedem der Mehrzahl von Speichern entspricht, in einem Einzelzeilenvektorformat als der Delta-Raumvektor verarbeitet wird; und
c) einen Zuweisungsreihenfolgevektor, der die Reihenfolge der Priorität bei der Raumzuweisung aus der Raumzuweisungsreihenfolge über die Mehrzahl von Kategorien für den Speicher erfasst, wobei eine Protokolldatei für einen Speicher aus der Mehrzahl von Protokolldateien in eine Mehrzahl von Zeilenvektoren mit derselben Länge verarbeitet wird, die als "Basiszuweisungsreihenfolgevektoren" angegeben sind, wobei jeder Zeilenvektor eine Iteration der Optimierung repräsentiert und die Anzahl der Zeilenvektoren gleich der Anzahl der Iterationen ist und die Länge jedes Zeilenvektors gleich der Anzahl der Mehrzahl von Kategorien des entsprechenden Speichers ist, wobei jede Zelle der Zeile eine Kategorie unter der Mehrzahl von Kategorien repräsentiert und der Wert jeder Zelle der Zeile eine feste inkrementelle Raumzuweisung für die Kategorie für einen inkrementellen Fuß während der Iteration repräsentiert, wobei die Verarbeitung der Basiszuweisungsreihenfolgevektoren durch Berechnen kumulativer Summen für jede Iteration ausgeführt wird und als "kumulative Gesamtzuweisungsreihenfolgevektoren" bezeichnet wird und die weitere Verarbeitung durch Addieren der Basiszuweisungsreihenfolgevektoren oder der kumulativen Gesamtzuweisungsreihenfolgevektoren nacheinander ausgeführt wird, um einen Einzelzeilenvektor zu bilden, der den Zuweisungsreihenfolgevektor in zwei Formaten repräsentiert, nämlich dem Basiszuweisungsreihenfolgevektor und dem kumulativen Zuweisungsreihenfolgevektor;
Erzeugen einer Mehrzahl von Raummatrizen, wobei jede Spalte den Speicher repräsentiert und die Anzahl der Spalten der Anzahl der Mehrzahl von Speichern entspricht und wobei jede Zeile eine Kategorie und die Anzahl der Zeilen repräsentiert, die einer Anzahl der Mehrzahl von Kategorien entspricht, wobei die Mehrzahl von Raummatrizen Folgendes umfasst:
a) eine endgültige Raummatrix, die aus dem endgültigen Raumvektor erzeugt wird, der jedem der Mehrzahl von Speichern entspricht, durch Umwandeln des Formats des endgültigen Raumvektors von einem Einzelzeilenvektor in einen Einzelspaltenvektor und Berücksichtigen der Mehrzahl der Speicher und Anordnen einer Mehrzahl von endgültigen Raumvektoren der Mehrzahl von Speichern in einem Matrixformat, wobei der Wert jedes Elements des Spaltenvektors den endgültigen Raum repräsentiert, der jeder der Mehrzahl von Kategorien zugewiesen ist; und
b) eine Delta-Raummatrix, die aus dem Delta-Raumvektor erzeugt wird, der jedem der Mehrzahl von Speichern entspricht, durch Umwandeln des Formats des Delta-Raumvektors von einem Einzelzeilenvektor in einen Einzelspaltenvektor und Berücksichtigen der Mehrzahl der Speicher und Anordnen einer Mehrzahl von Delta-Raumvektoren der Mehrzahl von Speichern in einem Matrixformat; und
c) eine Raumzuweisungsreihenfolgematrix, die aus dem Zuweisungsreihenfolgevektor erzeugt wird, der jedem der Mehrzahl von Speichern entspricht, durch Umwandeln des Zuweisungsreihenfolgevektorformats in ein Spaltenvektorformat und Berücksichtigen der Mehrzahl von Speichern und Anordnen einer Mehrzahl von Zuweisungsreihenfolgevektoren der Mehrzahl von Speichern in einem Matrixformat;
Verarbeiten, über ein Musterextraktionswerkzeug, das durch den einen oder die mehreren Hardwareprozessoren implementiert wird, der endgültigen Raummatrix, der Delta-Raummatrix und der Raumzuweisungsreihenfolgematrix durch Verwenden einer Mehrzahl von Formaten von Messungen des endgültigen Raums, des Delta-Raums und der Raumzuweisungsreihenfolge und Anwenden der Standardisierung, einer Kovarianzmatrixerzeugung und der Hauptkomponentenanalyse "PCA", um einen Satz von Mustern für jede der endgültigen Raummatrix, der Delta-Raummatrix und der Raumzuweisungsreihenfolgematrix basierend auf Eigenvektoren und Eigenwerten zu identifizieren, die während der "PCA" erzeugt werden;
Erzeugen einer Speicherebenen-Fehlanpassungsbewertung durch Vergleichen existierender Grundrisse mit dem Satz von Mustern, die von jeder der endgültigen Raummatrix, der Delta-Raummatrix und der Raumzuweisungsreihenfolgematrix abgeleitet sind, und Verarbeiten des Satzes von Mustern für jede der endgültigen Raummatrix, der Delta-Raummatrix und der Raumzuweisungsreihenfolgematrix unter der Mehrzahl von Formaten von Messungen des endgültigen Raums, des Delta-Raums und der Raumzuweisungsreihenfolge, um die Qualität des Satzes von Mustern aus dem Varianzbeitrag des Satzes von Mustern der PCA zu bestimmen;
Durchführen von Dreiebeneniterationen, die Folgendes umfassen:
a) eine erste Ebene von Iterationen zum Auswählen des obersten Satzes von Mustern aus dem Satz von Mustern, der aus jedem von i) der endgültigen Raummatrix, ii) der Delta-Raummatrix und iii) der Zuweisungsreihenfolge gebildet ist, unter verschiedenen Formaten des endgültigen Raums, des Delta-Raums und der Zuweisungsreihenfolge und Auswählen eines obersten Satzes von Mustern für ein geeignetes Format unter einem des endgültigen Raums, des Delta-Raums und der Raumzuweisungsreihenfolge, wobei die Qualität des Satzes von Mustern für den obersten Satz von Mustern maximal ist;
b) eine zweite Ebene von Iterationen zum Anwenden auf den Satz von Mustern, der von den Iterationen der ersten Ebene empfangen wird, wobei das Ergebnis jeder Iteration innerhalb der zweiten Ebene von Iterationen verwendet wird, um einen Fehlanpassungsspeicher unter Verwendung der Fehlanpassungsbewertung zu lokalisieren und eines von i) der endgültigen Raummatrix, ii) der Delta-Raummatrix und iii) der Raumzuweisungsreihenfolge für nur lokalisierten Fehlanpassungsspeicher unter Verwendung von identifizierten Regeln basierend auf dem Ergebnis der vorherigen Iteration innerhalb der zweiten Ebene von Iterationen neu zu berechnen, und Erzeugen des Satzes von Mustern durch Hinzufügen eines neuen Ergebnisses, das von dem Fehlanpassungsspeicher für eines der neu berechneten i) der endgültigen Raummatrix, ii) der Delta-Raummatrix und iii) der Raumzuweisungsreihenfolge empfangen wird, wobei die Iteration fortgesetzt wird, bis kein Speicher von dem Muster in Bezug auf die Ganganpassung abweicht; und
c) eine dritte Ebene von Iterationen, die auf den Satz von Mustern angewendet wird, der von den Iterationen der zweiten Ebene empfangen wird, wobei das Ergebnis jeder Iteration innerhalb der dritten Ebene von Iterationen verwendet wird, um den Speicher, der von dem Satz von Mustern abweicht, unter Verwendung eines multivariaten Abstands zu lokalisieren und eines von i) der endgültigen Raummatrix, ii) der Delta-Raummatrix und iii) der Zuweisungsreihenfolge für nur diesen abweichenden Speicher unter Verwendung von identifizierten Regeln basierend auf dem Ergebnis der vorherigen Iteration innerhalb der dritten Ebene von Iterationen neu zu berechnen, und Erzeugen des Satzes von Mustern durch Hinzufügen eines neuen Ergebnisses, das von dem abweichenden Speicher für eines der neu berechneten i) der endgültigen Raummatrix, ii) der Delta-Raummatrix und iii) der Raumzuweisung empfangen wird, wobei die Iteration fortgesetzt wird, bis kein Speicher von dem Muster abweicht; und
Erzeugen eines Satzes von Grundrissen und Planogrammen gemäß dem Satz von Mustern, der von den Iterationen der dritten Ebene empfangen wird, wobei die Grundrisse und Planogramme jedem der Mehrzahl von Speichern gemäß dem Satz von Mustern empfohlen werden, der von den Iterationen der dritten Ebene empfangen wird.

7. System nach Anspruch 6, wobei
a) der endgültige Raum in der Mehrzahl von Formaten gemessen wird, die i) lineare Füße, ii) quadratische Füße, iii) gewichteten sichtbaren Raum und iv. kognitiven sichtbaren Raum umfassen,
b) der Delta-Raum in der Mehrzahl von Formaten gemessen wird, die i) den Delta-Raum in quadratischen Füßen, ii) den Delta-Raum in Prozent, berechnet durch den Anteil des Delta-Raums im Vergleich zu altem Raum, der von jeder der Mehrzahl von Kategorien belegt ist, und iii) den Delta-Raum in Prozent, berechnet durch den Anteil des Delta-Raums im Vergleich zu verfügbarem Raum für jede der Mehrzahl von Kategorien von jedem der Mehrzahl von Speichern, in denen der verfügbare Raum durch die Optimierungsregeln wie minimaler Raum und maximaler Raum entschieden wird, umfassen, und
c) die Reihenfolge der Raumbelegung durch die Mehrzahl von Formaten dargestellt wird, die i) inkrementelle quadratische Füße und ii) kumulative quadratische Füße umfassen.

8. System nach Anspruch 6, wobei der Satz von Mustern, der von den dritten Iterationen empfangen wird, mit einem Satz von Gründen begleitet wird, die zur Bildung des Satzes von Mustern basierend auf Verkaufstreibern führen, die einem oder mehreren Speichern zugeordnet sind, und wobei die Visualisierung des Raumzuweisungsmechanismus für einen Speicher durch Animationsvideos durch Verwenden entsprechender Vektoren der kumulativen Gesamtordnung, in denen die Farbe jeder Zelle proportional zur kumulativen Gesamtordnung ist, ermöglicht wird.

9. System nach Anspruch 6, wobei ein Satz von Prioritätskategorien, die spezifisch für Speicher für verschiedene praktische Anwendungen sind, die der Umgestaltung von Speichern zugeordnet sind, durch Lokalisieren der Kategorien, die während anfänglicher Iterationen inkrementellen Raum gewinnen, und Identifizieren entsprechender Speicher aus dem Satz von Mustern, die aus der Zuordnungsmatrix und aus Vektoren der kumulativen Gesamtordnung entsprechender Speicher abgeleitet werden, identifiziert wird.

10. System nach Anspruch 6, wobei ein idealer Bereich der Raumänderung für jede Kategorie für jeden Speicher unter Berücksichtigung der historischen Anzahl von Raumänderungen und der Größe von Raumänderungen der Kategorien der Speicher entschieden wird.

11. Ein oder mehrere nichtflüchtige maschinenlesbare Informationsspeichermedien, die eine oder mehrere Anweisungen umfassen, die, wenn sie von einem oder mehreren Hardwareprozessoren (104) ausgeführt werden, Folgendes bewirken:
Erfassen von Speicherdaten über eine vordefinierte Zeitspanne von einer Mehrzahl von Speichern;
Erhalten von Verkaufs-, Raum- und demografischen Informationen aus den Speicherdaten über eine Mehrzahl von Kategorien in der Mehrzahl von Speichern;
Verarbeiten der Verkaufs-, Raum- und demografischen Informationen über ein Raumoptimierungswerkzeug, das durch den einen oder die mehreren Hardwareprozessoren implementiert wird, um eine Raumoptimierung in Übereinstimmung mit einem Satz von vordefinierten Optimierungsregeln durchzuführen, die Kategorienebenen-Optimierungsregeln und In-Gang-Optimierungsregeln umfassen, um Folgendes zu erzeugen:
a) eine Mehrzahl von endgültigen Raumzuweisungen für jede der Mehrzahl von Kategorien von jedem der Mehrzahl von Speichern;
b) eine Mehrzahl von Delta-Raumzuweisungen für jede der Mehrzahl von Kategorien von jedem der Mehrzahl von Speichern, wobei ein Delta-Raum als eine Differenz zwischen einem anfänglichen Raum, der durch eine Kategorie unter der Mehrzahl von Kategorien belegt ist, und einem endgültigen Raum, der durch das Raumoptimierungswerkzeug für die Kategorie vorgeschlagen wird, definiert ist; und
c) Einzelheiten zu einer Raumzuweisungsreihenfolge für die Kategorie für jeden inkrementellen Fuß während jeder Iteration der Raumoptimierung durch das Raumoptimierungswerkzeug, die in einer Mehrzahl von Protokolldateien für eine Mehrzahl von Speichern erfasst wird;
Erzeugen einer Mehrzahl von Vektoren, die Folgendes umfassen:
a) einen endgültigen Raumvektor, der eine endgültige Raumzuweisung erfasst, die jeder der Mehrzahl von Kategorien eines Speichers unter der Mehrzahl von Speichern entspricht, wobei die endgültige Raumzuweisung, die jedem der Mehrzahl von Speichern entspricht, in einem Einzelzeilenvektorformat als der endgültige Raumvektor verarbeitet wird;
b) einen Delta-Raumvektor, der eine Delta-Raumzuweisung für jede der Mehrzahl von Kategorien für den Speicher erfasst, wobei die Delta-Raumzuweisung, die jedem der Mehrzahl von Speichern entspricht, in einem Einzelzeilenvektorformat als der Delta-Raumvektor verarbeitet wird; und
c) einen Zuweisungsreihenfolgevektor, der die Reihenfolge der Priorität bei der Raumzuweisung aus der Raumzuweisungsreihenfolge über die Mehrzahl von Kategorien für den Speicher erfasst, wobei eine Protokolldatei für einen Speicher aus der Mehrzahl von Protokolldateien in eine Mehrzahl von Zeilenvektoren mit derselben Länge verarbeitet wird, die als "Basiszuweisungsreihenfolgevektoren" angegeben sind, wobei jeder Zeilenvektor eine Iteration der Optimierung repräsentiert und die Anzahl der Zeilenvektoren gleich der Anzahl der Iterationen ist und die Länge jedes Zeilenvektors gleich der Anzahl der Mehrzahl von Kategorien des entsprechenden Speichers ist, wobei jede Zelle der Zeile eine Kategorie unter der Mehrzahl von Kategorien repräsentiert und der Wert jeder Zelle der Zeile eine feste inkrementelle Raumzuweisung für die Kategorie für einen inkrementellen Fuß während der Iteration repräsentiert, wobei die Verarbeitung der Basiszuweisungsreihenfolgevektoren durch Berechnen kumulativer Summen für jede Iteration ausgeführt wird und als "kumulative Gesamtzuweisungsreihenfolgevektoren" bezeichnet wird und die weitere Verarbeitung durch Addieren der Basiszuweisungsreihenfolgevektoren oder der kumulativen Gesamtzuweisungsreihenfolgevektoren nacheinander ausgeführt wird, um einen Einzelzeilenvektor zu bilden, der den Zuweisungsreihenfolgevektor in zwei Formaten repräsentiert, nämlich dem Basiszuweisungsreihenfolgevektor und dem kumulativen Zuweisungsreihenfolgevektor;
Erzeugen einer Mehrzahl von Raummatrizen, wobei jede Spalte den Speicher repräsentiert und die Anzahl der Spalten der Anzahl der Mehrzahl von Speichern entspricht und wobei jede Zeile eine Kategorie und die Anzahl der Zeilen repräsentiert, die einer Anzahl der Mehrzahl von Kategorien entspricht, wobei die Mehrzahl von Raummatrizen Folgendes umfasst:
a) eine endgültige Raummatrix, die aus dem endgültigen Raumvektor erzeugt wird, der jedem der Mehrzahl von Speichern entspricht, durch Umwandeln des Formats des endgültigen Raumvektors von einem Einzelzeilenvektor in einen Einzelspaltenvektor und Berücksichtigen der Mehrzahl der Speicher und Anordnen einer Mehrzahl von endgültigen Raumvektoren der Mehrzahl von Speichern in einem Matrixformat, wobei der Wert jedes Elements des Spaltenvektors den endgültigen Raum repräsentiert, der jeder der Mehrzahl von Kategorien zugewiesen ist;
b) eine Delta-Raummatrix, die aus dem Delta-Raumvektor erzeugt wird, der jedem der Mehrzahl von Speichern entspricht, durch Umwandeln des Formats des Delta-Raumvektors von einem Einzelzeilenvektor in einen Einzelspaltenvektor und Berücksichtigen der Mehrzahl der Speicher und Anordnen einer Mehrzahl von Delta-Raumvektoren der Mehrzahl von Speichern in einem Matrixformat; und
c) eine Raumzuweisungsreihenfolgematrix, die aus dem Zuweisungsreihenfolgevektor erzeugt wird, der jedem der Mehrzahl von Speichern entspricht, durch Umwandeln des Zuweisungsreihenfolgevektorformats in ein Spaltenvektorformat und Berücksichtigen der Mehrzahl von Speichern und Anordnen einer Mehrzahl von Zuweisungsreihenfolgevektoren der Mehrzahl von Speichern in einem Matrixformat;
Verarbeiten, über ein Musterextraktionswerkzeug, der endgültigen Raummatrix, der Delta-Raummatrix und der Raumzuweisungsreihenfolgematrix durch Verwenden einer Mehrzahl von Formaten von Messungen des endgültigen Raums, des Delta-Raums und der Raumzuweisungsreihenfolge und Anwenden der Standardisierung, einer Kovarianzmatrixerzeugung und der Hauptkomponentenanalyse "PCA", um einen Satz von Mustern für jede der endgültigen Raummatrix, der Delta-Raummatrix und der Raumzuweisungsreihenfolgematrix basierend auf Eigenvektoren und Eigenwerten zu identifizieren, die während der "PCA" erzeugt werden;
Erzeugen einer Speicherebenen-Fehlanpassungsbewertung durch Vergleichen existierender Grundrisse mit dem Satz von Mustern, die von jeder der endgültigen Raummatrix, der Delta-Raummatrix und der Raumzuweisungsreihenfolgematrix abgeleitet sind, und Verarbeiten des Satzes von Mustern für jede der endgültigen Raummatrix, der Delta-Raummatrix und der Raumzuweisungsreihenfolgematrix unter der Mehrzahl von Formaten von Messungen des endgültigen Raums, des Delta-Raums und der Raumzuweisungsreihenfolge, um die Qualität des Satzes von Mustern aus dem Varianzbeitrag des Satzes von Mustern der PCA zu bestimmen;
Durchführen von Dreiebeneniterationen, die Folgendes umfassen:
a) eine erste Ebene von Iterationen zum Auswählen des obersten Satzes von Mustern aus dem Satz von Mustern, der aus jedem von i) der endgültigen Raummatrix, ii) der Delta-Raummatrix und iii) der Zuweisungsreihenfolge gebildet ist, unter verschiedenen Formaten des endgültigen Raums, des Delta-Raums und der Zuweisungsreihenfolge und Auswählen eines obersten Satzes von Mustern für ein geeignetes Format unter einem des endgültigen Raums, des Delta-Raums und der Raumzuweisungsreihenfolge, wobei die Qualität des Satzes von Mustern für den obersten Satz von Mustern maximal ist;
b) eine zweite Ebene von Iterationen zum Anwenden auf den Satz von Mustern, der von den Iterationen der ersten Ebene empfangen wird, wobei das Ergebnis jeder Iteration innerhalb der zweiten Ebene von Iterationen verwendet wird, um einen Fehlanpassungsspeicher unter Verwendung der Fehlanpassungsbewertung zu lokalisieren und eines von i) der endgültigen Raummatrix, ii) der Delta-Raummatrix und iii) der Raumzuweisungsreihenfolge für nur lokalisierten Fehlanpassungsspeicher unter Verwendung von identifizierten Regeln basierend auf dem Ergebnis der vorherigen Iteration innerhalb der zweiten Ebene von Iterationen neu zu berechnen, und Erzeugen des Satzes von Mustern durch Hinzufügen eines neuen Ergebnisses, das von dem Fehlanpassungsspeicher für eines der neu berechneten i) der endgültigen Raummatrix, ii) der Delta-Raummatrix und iii) der Raumzuweisungsreihenfolge empfangen wird, wobei die Iteration fortgesetzt wird, bis kein Speicher von dem Muster in Bezug auf die Ganganpassung abweicht; und
c) eine dritte Ebene von Iterationen, die auf den Satz von Mustern angewendet wird, der von den Iterationen der zweiten Ebene empfangen wird, wobei das Ergebnis jeder Iteration innerhalb der dritten Ebene von Iterationen verwendet wird, um den Speicher, der von dem Satz von Mustern abweicht, unter Verwendung eines multivariaten Abstands zu lokalisieren und eines von i) der endgültigen Raummatrix, ii) der Delta-Raummatrix und iii) der Zuweisungsreihenfolge für nur diesen abweichenden Speicher unter Verwendung von identifizierten Regeln basierend auf dem Ergebnis der vorherigen Iteration innerhalb der dritten Ebene von Iterationen neu zu berechnen, und Erzeugen des Satzes von Mustern durch Hinzufügen eines neuen Ergebnisses, das von dem abweichenden Speicher für eines der neu berechneten i) der endgültigen Raummatrix, ii) der Delta-Raummatrix und iii) der Raumzuweisung empfangen wird, wobei die Iteration fortgesetzt wird, bis kein Speicher von dem Muster abweicht; und
Erzeugen eines Satzes von Grundrissen und Planogrammen gemäß dem Satz von Mustern, der von den Iterationen der dritten Ebene empfangen wird, wobei die Grundrisse und Planogramme jedem der Mehrzahl von Speichern gemäß dem Satz von Mustern empfohlen werden, der von den Iterationen der dritten Ebene empfangen wird.

12. Ein oder mehrere nichtflüchtige maschinenlesbare Informationsspeichermedien nach Anspruch 11, wobei
a) der endgültige Raum in der Mehrzahl von Formaten gemessen wird, die i) lineare Füße, ii) quadratische Füße, iii) gewichteten sichtbaren Raum und iv) kognitiven sichtbaren Raum umfassen,
b) der Delta-Raum in der Mehrzahl von Formaten gemessen wird, die i) den Delta-Raum in quadratischen Füßen, ii) den Delta-Raum in Prozent, berechnet durch den Anteil des Delta-Raums im Vergleich zu altem Raum, der von jeder der Mehrzahl von Kategorien belegt ist, und iii) den Delta-Raum in Prozent, berechnet durch den Anteil des Delta-Raums im Vergleich zu verfügbarem Raum für jede der Mehrzahl von Kategorien von jedem der Mehrzahl von Speichern, in denen der verfügbare Raum durch die Optimierungsregeln wie minimaler Raum und maximaler Raum entschieden wird, umfassen, und
c) die Reihenfolge der Raumbelegung durch die Mehrzahl von Formaten dargestellt wird, die i) inkrementelle quadratische Füße und ii) kumulative quadratische Füße umfassen.

13. Ein oder mehrere nichtflüchtige maschinenlesbare Informationsspeichermedien nach Anspruch 11, wobei der Satz von Mustern, der von den dritten Iterationen empfangen wird, mit einem Satz von Gründen begleitet wird, die zur Bildung des Satzes von Mustern basierend auf Verkaufstreibern führen, die einem oder mehreren Speichern zugeordnet sind, und wobei die Visualisierung des Raumzuweisungsmechanismus für einen Speicher durch Animationsvideos durch Verwenden entsprechender Vektoren der kumulativen Gesamtordnung, in denen die Farbe jeder Zelle proportional zur kumulativen Gesamtordnung ist, ermöglicht wird.

14. Ein oder mehrere nichtflüchtige maschinenlesbare Informationsspeichermedien nach Anspruch 11, wobei ein Satz von Prioritätskategorien, die spezifisch für Speicher für verschiedene praktische Anwendungen sind, die der Umgestaltung von Speichern zugeordnet sind, durch Lokalisieren der Kategorien, die während anfänglicher Iterationen inkrementellen Raum gewinnen, und Identifizieren entsprechender Speicher aus dem Satz von Mustern, die aus der Zuordnungsmatrix und aus Vektoren der kumulativen Gesamtordnung entsprechender Speicher abgeleitet werden, identifiziert wird.

15. Ein oder mehrere nichtflüchtige maschinenlesbare Informationsspeichermedien nach Anspruch 11, wobei ein idealer Bereich der Raumänderung für jede Kategorie für jeden Speicher unter Berücksichtigung der historischen Anzahl von Raumänderungen und der Größe von Raumänderungen der Kategorien der Speicher entschieden wird.

## Revendications

1. Procédé mis en œuvre par processeur (300) pour la planification de l'espace commercial, le procédé comprenant :
l'acquisition (302), via un ou plusieurs processeurs matériels (104), de données de magasin sur un laps de temps prédéfini à partir d'une pluralité de magasins ;
l'obtention (304), via les un ou plusieurs processeurs matériels (104), d'informations de vente, d'espace et démographique à partir des données de magasin sur une pluralité de catégories dans la pluralité de magasins ;
le traitement (306) des informations de vente, d'espace et démographique, via un outil d'optimisation spatiale mis en œuvre par les un ou plusieurs processeurs matériels (104), pour effectuer une optimisation spatiale conformément à un ensemble de règles d'optimisation prédéfinies comprenant des règles d'optimisation de niveau de catégorie et des règles d'optimisation d'allée, pour générer :
a) une pluralité d'attributions d'espace finales pour chacune de la pluralité de catégories de chacun de la pluralité de magasins ;
b) une pluralité d'attributions d'espace delta pour chacune de la pluralité de catégories de chacun de la pluralité de magasins, dans lequel un espace delta est défini comme une différence entre un espace initial occupé par une catégorie parmi la pluralité de catégories et un espace final suggéré par l'outil d'optimisation spatiale pour la catégorie ; et
c) des détails sur un ordre d'attribution d'espace pour la catégorie pour chaque pied incrémentiel pendant chaque itération d'optimisation spatiale, par l'outil d'optimisation spatiale, capturés dans une pluralité de fichiers journaux pour une pluralité de magasins ;
la création (308), via les un ou plusieurs processeurs matériels (104), d'une pluralité de vecteurs comprenant :
a) un vecteur d'espace final capturant une attribution d'espace finale correspondant à chacune de la pluralité de catégories d'un magasin parmi la pluralité de magasins, dans lequel l'attribution d'espace finale correspondant à chacun de la pluralité de magasins est traitée dans un format de vecteur ligne unique comme vecteur d'espace final ;
b) un vecteur d'espace delta capturant une attribution d'espace delta pour chacune de la pluralité de catégories pour le magasin, dans lequel l'attribution d'espace delta correspondant à chacun de la pluralité de magasins est traitée dans un format de vecteur ligne unique comme vecteur d'espace delta ; et
c) un vecteur d'ordre d'attribution capturant un ordre de priorité dans une attribution d'espace à partir de l'ordre d'attribution d'espace à travers la pluralité de catégories pour le magasin, dans lequel un fichier journal pour un magasin parmi la pluralité de fichiers journaux est traité en une pluralité de vecteurs lignes avec la même longueur notée comme « vecteurs d'ordre d'attribution de base », dans lequel chaque vecteur ligne représente une itération d'optimisation, et un nombre de vecteurs lignes est égal à un nombre d'itérations et une longueur de chaque vecteur ligne est égale à un nombre de la pluralité de catégories de magasin correspondant, chaque cellule de la rangée représente une catégorie parmi la pluralité de catégories, et une valeur de chaque cellule de la rangée représente une attribution d'espace incrémentielle fixe pour la catégorie pour un pied incrémentiel pendant l'itération, un traitement de vecteurs d'ordre d'attribution de base est effectué en calculant des totaux cumulés pour chaque itération et appelé « vecteurs d'ordre d'attribution total cumulé » et un traitement supplémentaire est effectué en ajoutant des vecteurs d'ordre d'attribution de base ou des vecteurs d'ordre d'attribution total cumulé un par un pour former un vecteur ligne unique représentant le vecteur d'ordre d'attribution dans deux formats à savoir un vecteur d'ordre d'attribution de base et un vecteur d'ordre d'attribution cumulatif ;
la génération (310), via les un ou plusieurs processeurs matériels (104), d'une pluralité de matrices d'espace dans lesquelles chaque colonne représente le magasin et un nombre de colonnes est équivalent à un nombre de la pluralité de magasins, et dans lesquelles chaque rangée représente une catégorie et un nombre de rangées équivalent à un nombre de la pluralité de catégories, la pluralité de matrices d'espace comprenant :
a) une matrice d'espace finale, générée à partir du vecteur d'espace final correspondant à chacun de la pluralité de magasins, en convertissant le format du vecteur d'espace final d'un vecteur ligne unique en un vecteur de colonne unique, et en considérant la pluralité de magasins et en agençant une pluralité de vecteurs d'espace final de la pluralité de magasins dans un format de matrice, dans lequel une valeur de chaque élément du vecteur de colonne représente un espace final attribué à chacune de la pluralité de catégories ;
b) une matrice d'espace delta, générée à partir du vecteur d'espace delta correspondant à chacun de la pluralité de magasins, en convertissant un format du vecteur d'espace delta d'un vecteur ligne unique en un vecteur de colonne unique, et en considérant la pluralité de magasins et en agençant une pluralité de vecteurs d'espace delta de la pluralité de magasins dans un format de matrice ; et
c) une matrice d'ordre d'attribution d'espace, générée à partir du vecteur d'ordre d'attribution correspondant à chacun de la pluralité de magasins, en convertissant le format de vecteur d'ordre d'attribution en un format de vecteur de colonne et en considérant la pluralité de magasins et en agençant une pluralité de vecteurs d'ordre d'attribution de la pluralité de magasins dans un format de matrice ;
le traitement (312), via un outil d'extraction de motif mis en œuvre par les un ou plusieurs processeurs matériels (104), de la matrice d'espace finale, de la matrice d'espace delta et de la matrice d'ordre d'attribution d'espace en utilisant une pluralité de formats de mesures d'espace final, d'espace delta et d'ordre d'attribution d'espace et en appliquant une standardisation, une création de matrice de covariance et une analyse en composantes principales « PCA » pour identifier un ensemble de motifs pour chacun de la matrice d'espace finale, de la matrice d'espace delta et de la matrice d'ordre d'attribution d'espace sur la base de vecteurs propres et de valeurs propres générés pendant la « PCA », dans lequel la standardisation est effectuée en soustrayant chaque vecteur de magasin d'un vecteur de valeur moyenne dans lequel le vecteur de valeur moyenne est calculé en considérant la pluralité de magasins pour chaque cellule de la matrice d'espace finale, de la matrice d'espace delta et de la matrice d'ordre d'attribution d'espace, et dans lequel la « PCA » est appliquée sur la matrice de covariance pour générer un ensemble de vecteurs propres avec des valeurs propres et des saturations factorielles correspondantes dans lesquelles l'ensemble de vecteurs propres qui sont supérieurs à 1 est considéré comme l'ensemble de motifs ;
la génération (314), via les un ou plusieurs processeurs matériels (104), d'un score de désadaptation de niveau de magasin en comparant des plans de plancher existants avec l'ensemble de motifs dérivés de chacun de la matrice d'espace finale, de la matrice d'espace delta et de la matrice d'ordre d'attribution d'espace, et le traitement de l'ensemble de motifs pour chacun de la matrice d'espace finale, de la matrice d'espace delta et de la matrice d'ordre d'attribution d'espace sous la pluralité de formats de mesures de l'espace final, de l'espace delta et de l'ordre d'attribution d'espace pour déterminer une qualité de l'ensemble de motifs à partir d'une contribution de variance de l'ensemble de motifs de PCA ;
l'exécution (316), via les un ou plusieurs processeurs matériels (104), d'itérations à trois niveaux comprenant :
a) un premier niveau d'itérations pour sélectionner un ensemble supérieur de motifs à partir de l'ensemble de motifs formés à partir de chacun de i) la matrice d'espace finale, ii) la matrice d'espace delta et iii) l'ordre d'attribution, sous différents formats d'espace final, d'espace delta et d'ordre d'attribution et la sélection d'un ensemble supérieur de motifs pour un format approprié parmi l'un de l'espace final, de l'espace delta et de l'ordre d'attribution d'espace, dans lequel la qualité de l'ensemble de motifs est maximale pour l'ensemble supérieur de motifs ;
b) un deuxième niveau d'itérations pour appliquer à l'ensemble de motifs reçu à partir des itérations de premier niveau dans lequel un résultat de chaque itération dans le deuxième niveau d'itérations est utilisé pour localiser un magasin de désadaptation en utilisant le score de désadaptation et recalculer l'un quelconque de i) la matrice d'espace finale, ii) la matrice d'espace delta et iii) l'ordre d'attribution d'espace pour uniquement un magasin de désadaptation localisé en utilisant des règles identifiées sur la base d'un résultat d'itération précédente dans le deuxième niveau d'itérations, et générer l'ensemble de motifs en ajoutant un nouveau résultat reçu à partir du magasin de désadaptation pour l'un de i) la matrice d'espace finale, ii) la matrice d'espace delta et iii) l'ordre d'attribution d'espace recalculés, dans lequel l'itération se poursuit jusqu'à ce qu'aucun magasin ne s'écarte du motif en termes d'ajustement d'allée ; et
c) un troisième niveau d'itérations appliqué à l'ensemble de motifs reçu à partir d'itérations de deuxième niveau dans lequel un résultat de chaque itération dans le troisième niveau d'itérations est utilisé pour localiser le magasin s'écartant de l'ensemble de motifs en utilisant une distance multivariée, et recalculer l'un quelconque de i) la matrice d'espace finale, ii) la matrice d'espace delta et iii) l'ordre d'attribution pour uniquement ces magasins s'écartant en utilisant des règles identifiées sur la base d'un résultat d'itération précédente dans le troisième niveau d'itérations, et générer l'ensemble de motifs en ajoutant un nouveau résultat reçu à partir du magasin s'écartant pour l'un de i) la matrice d'espace finale, ii) la matrice d'espace delta et iii) l'attribution d'espace recalculés, dans lequel l'itération se poursuit jusqu'à ce qu'aucun magasin ne s'écarte du motif ; et
la génération (318), via les un ou plusieurs processeurs matériels (104), d'un ensemble de plans de plancher et de planogrammes conformément à l'ensemble de motifs reçu à partir d'itérations de troisième niveau, dans lequel les plans de plancher et les planogrammes sont recommandés à chacun de la pluralité de magasins conformément à l'ensemble de motifs reçu à partir d'itérations de troisième niveau, et dans lequel chacun de l'ensemble de motifs comprend des informations de priorisation de catégories et un nombre de magasins adhérant à l'ensemble de motifs, permettant ainsi de décider d'un nombre de catégories avec une priorité élevée pour le remodelage du nombre de magasins.

2. Procédé selon la revendication 1, dans lequel
a) l'espace final est mesuré dans la pluralité de formats comprenant, i) des pieds linéaires, ii) des pieds carrés, iii) un espace visible pondéré et iv) un espace visible cognitif,
b) l'espace delta est mesuré dans la pluralité de formats comprenant, i) l'espace delta en pieds carrés, ii) l'espace delta en pourcentage, calculé par une proportion de l'espace delta par rapport à un espace ancien occupé par chacune de la pluralité de catégories et iii) l'espace delta en pourcentage, calculé par une proportion de l'espace delta par rapport à un espace disponible pour chacune de la pluralité de catégories de chacun de la pluralité de magasins dans lequel l'espace disponible est décidé par les règles d'optimisation telles qu'un espace minimum et un espace maximum, et
c) l'ordre d'occupation d'espace est représenté par la pluralité de formats comprenant i) des pieds carrés incrémentiels et ii) des pieds carrés cumulatifs.

3. Procédé selon la revendication 1, dans lequel l'ensemble de motifs reçu à partir de troisièmes itérations est accompagné d'un ensemble de raisons qui conduisent à la formation d'un ensemble de motifs sur la base de facteurs déterminants des ventes associés à un ou plusieurs magasins, et dans lequel la visualisation d'un mécanisme d'attribution d'espace pour un magasin par le biais de vidéos d'animation est permise en utilisant des vecteurs d'ordre total cumulatif correspondants dans lesquels la couleur de chaque cellule est proportionnelle au total cumulatif.

4. Procédé selon la revendication 1, dans lequel un ensemble de catégories de priorité spécifiques à des magasins pour différentes applications pratiques associées à un remodelage de magasins sont identifiées en localisant les catégories qui gagnent un espace incrémentiel au cours d'itérations initiales et en identifiant des magasins correspondants à partir de l'ensemble de motifs dérivés d'une matrice d'attribution et à partir de vecteurs d'ordre total cumulatif de magasins correspondants.

5. Procédé selon la revendication 1, dans lequel une plage idéale de changements d'espace pour chaque catégorie pour chaque magasin est décidée en considérant un nombre historique de changements d'espace et une ampleur de changements d'espace des catégories des magasins.

6. Système (100) pour la planification de l'espace commercial, le système (100) comprenant :
une mémoire (102) stockant des instructions ;
une ou plusieurs interfaces d'entrée/sortie « E/S » (106) ; et
un ou plusieurs processeurs matériels (104) couplés à la mémoire (102) via les une ou plusieurs interfaces E/S (106), dans lequel les un ou plusieurs processeurs matériels (104) sont configurés par les instructions pour :
acquérir des données de magasin sur un laps de temps prédéfini à partir d'une pluralité de magasins ;
obtenir des informations de vente, d'espace et démographique à partir des données de magasin sur une pluralité de catégories dans la pluralité de magasins ;
traiter les informations de vente, d'espace et démographique, via un outil d'optimisation spatiale mis en œuvre par les un ou plusieurs processeurs matériels, pour effectuer une optimisation spatiale conformément à un ensemble de règles d'optimisation prédéfinies comprenant des règles d'optimisation de niveau de catégorie et des règles d'optimisation d'allée, pour générer :
a) une pluralité d'attributions d'espace finales pour chacune de la pluralité de catégories de chacun de la pluralité de magasins ;
b) une pluralité d'attributions d'espace delta pour chacune de la pluralité de catégories de chacun de la pluralité de magasins, dans lequel un espace delta est défini comme une différence entre un espace initial occupé par une catégorie parmi la pluralité de catégories et un espace final suggéré par l'outil d'optimisation spatiale pour la catégorie ; et
c) des détails sur un ordre d'attribution d'espace pour la catégorie pour chaque pied incrémentiel pendant chaque itération d'optimisation spatiale, par l'outil d'optimisation spatiale, capturés dans une pluralité de fichiers journaux pour une pluralité de magasins ;
créer une pluralité de vecteurs comprenant :
a) un vecteur d'espace final capturant une attribution d'espace finale correspondant à chacune de la pluralité de catégories d'un magasin parmi la pluralité de magasins, dans lequel l'attribution d'espace finale correspondant à chacun de la pluralité de magasins est traitée dans un format de vecteur ligne unique comme vecteur d'espace final ;
b) un vecteur d'espace delta capturant une attribution d'espace delta pour chacune de la pluralité de catégories pour le magasin, dans lequel l'attribution d'espace delta correspondant à chacun de la pluralité de magasins est traitée dans un format de vecteur ligne unique comme vecteur d'espace delta ; et
c) un vecteur d'ordre d'attribution capturant un ordre de priorité dans une attribution d'espace à partir de l'ordre d'attribution d'espace à travers la pluralité de catégories pour le magasin, dans lequel un fichier journal pour un magasin parmi la pluralité de fichiers journaux est traité en une pluralité de vecteurs lignes avec la même longueur notée comme « vecteurs d'ordre d'attribution de base », dans lequel chaque vecteur ligne représente une itération d'optimisation, et un nombre de vecteurs lignes est égal à un nombre d'itérations et une longueur de chaque vecteur ligne est égale à un nombre de la pluralité de catégories de magasin correspondant, chaque cellule de la rangée représente une catégorie parmi la pluralité de catégories, et une valeur de chaque cellule de la rangée représente une attribution d'espace incrémentielle fixe pour la catégorie pour un pied incrémentiel pendant l'itération, un traitement de vecteurs d'ordre d'attribution de base est effectué en calculant des totaux cumulés pour chaque itération et appelé « vecteurs d'ordre d'attribution total cumulé » et un traitement supplémentaire est effectué en ajoutant des vecteurs d'ordre d'attribution de base ou des vecteurs d'ordre d'attribution total cumulé un par un pour former un vecteur ligne unique représentant le vecteur d'ordre d'attribution dans deux formats à savoir un vecteur d'ordre d'attribution de base et un vecteur d'ordre d'attribution cumulatif ;
générer une pluralité de matrices d'espace dans lesquelles chaque colonne représente le magasin et un nombre de colonnes est équivalent à un nombre de la pluralité de magasins, et dans lesquelles chaque rangée représente une catégorie et un nombre de rangées équivalent à un nombre de la pluralité de catégories, la pluralité de matrices d'espace comprenant :
a) une matrice d'espace finale, générée à partir du vecteur d'espace final correspondant à chacun de la pluralité de magasins, en convertissant le format du vecteur d'espace final d'un vecteur ligne unique en un vecteur de colonne unique, et en considérant la pluralité de magasins et en agençant une pluralité de vecteurs d'espace final de la pluralité de magasins dans un format de matrice, dans lequel une valeur de chaque élément du vecteur de colonne représente un espace final attribué à chacune de la pluralité de catégories ; et
b) une matrice d'espace delta, générée à partir du vecteur d'espace delta correspondant à chacun de la pluralité de magasins, en convertissant un format du vecteur d'espace delta d'un vecteur ligne unique en un vecteur de colonne unique, et en considérant la pluralité de magasins et en agençant une pluralité de vecteurs d'espace delta de la pluralité de magasins dans un format de matrice ; et
c) une matrice d'ordre d'attribution d'espace, générée à partir du vecteur d'ordre d'attribution correspondant à chacun de la pluralité de magasins, en convertissant le format de vecteur d'ordre d'attribution en un format de vecteur de colonne et en considérant la pluralité de magasins et en agençant une pluralité de vecteurs d'ordre d'attribution de la pluralité de magasins dans un format de matrice ;
traiter, via un outil d'extraction de motif mis en œuvre par les un ou plusieurs processeurs matériels, la matrice d'espace finale, la matrice d'espace delta et la matrice d'ordre d'attribution d'espace en utilisant une pluralité de formats de mesures d'espace final, d'espace delta et d'ordre d'attribution d'espace et en appliquant une standardisation, une création de matrice de covariance et une analyse en composantes principales « PCA » pour identifier un ensemble de motifs pour chacun de la matrice d'espace finale, de la matrice d'espace delta et de la matrice d'ordre d'attribution d'espace sur la base de vecteurs propres et de valeurs propres générés pendant la « PCA », dans lequel la standardisation est effectuée en soustrayant chaque vecteur de magasin d'un vecteur de valeur moyenne dans lequel le vecteur de valeur moyenne est calculé en considérant la pluralité de magasins pour chaque cellule de la matrice d'espace finale, de la matrice d'espace delta et de la matrice d'ordre d'attribution d'espace, et dans lequel la « PCA » est appliquée sur la matrice de covariance pour générer un ensemble de vecteurs propres avec des valeurs propres et des saturations factorielles correspondantes dans lesquelles l'ensemble de vecteurs propres qui sont supérieurs à 1 est considéré comme l'ensemble de motifs ;
générer un score de désadaptation de niveau de magasin en comparant des plans de plancher existants avec l'ensemble de motifs dérivés de chacun de la matrice d'espace finale, de la matrice d'espace delta et de la matrice d'ordre d'attribution d'espace, et traiter l'ensemble de motifs pour chacun de la matrice d'espace finale, de la matrice d'espace delta et de la matrice d'ordre d'attribution d'espace sous la pluralité de formats de mesures de l'espace final, de l'espace delta et de l'ordre d'attribution d'espace pour déterminer une qualité de l'ensemble de motifs à partir d'une contribution de variance de l'ensemble de motifs de PCA ;
effectuer des itérations à trois niveaux comprenant :
a) un premier niveau d'itérations pour sélectionner un ensemble supérieur de motifs à partir de l'ensemble de motifs formés à partir de chacun de i) la matrice d'espace finale, ii) la matrice d'espace delta et iii) l'ordre d'attribution, sous différents formats d'espace final, d'espace delta et d'ordre d'attribution et sélectionner un ensemble supérieur de motifs pour un format approprié parmi l'un de l'espace final, de l'espace delta et de l'ordre d'attribution d'espace, dans lequel la qualité de l'ensemble de motifs est maximale pour l'ensemble supérieur de motifs ;
b) un deuxième niveau d'itérations pour appliquer à l'ensemble de motifs reçu à partir des itérations de premier niveau dans lequel un résultat de chaque itération dans le deuxième niveau d'itérations est utilisé pour localiser un magasin de désadaptation en utilisant le score de désadaptation et recalculer l'un quelconque de i) la matrice d'espace finale, ii) la matrice d'espace delta et iii) l'ordre d'attribution d'espace pour uniquement un magasin de désadaptation localisé en utilisant des règles identifiées sur la base d'un résultat d'itération précédente dans le deuxième niveau d'itérations, et générer l'ensemble de motifs en ajoutant un nouveau résultat reçu à partir du magasin de désadaptation pour l'un de i) la matrice d'espace finale, ii) la matrice d'espace delta et iii) l'ordre d'attribution d'espace recalculés, dans lequel l'itération se poursuit jusqu'à ce qu'aucun magasin ne s'écarte du motif en termes d'ajustement d'allée ; et
c) un troisième niveau d'itérations appliqué à l'ensemble de motifs reçu à partir d'itérations de deuxième niveau dans lequel un résultat de chaque itération dans le troisième niveau d'itérations est utilisé pour localiser le magasin s'écartant de l'ensemble de motifs en utilisant une distance multivariée, et recalculer l'un quelconque de i) la matrice d'espace finale, ii) la matrice d'espace delta et iii) l'ordre d'attribution pour uniquement ces magasins s'écartant en utilisant des règles identifiées sur la base d'un résultat d'itération précédente dans le troisième niveau d'itérations, et générer l'ensemble de motifs en ajoutant un nouveau résultat reçu à partir du magasin s'écartant pour l'un de i) la matrice d'espace finale, ii) la matrice d'espace delta et iii) l'attribution d'espace recalculés, dans lequel l'itération se poursuit jusqu'à ce qu'aucun magasin ne s'écarte du motif ; et
générer un ensemble de plans de plancher et de planogrammes conformément à l'ensemble de motifs reçu à partir d'itérations de troisième niveau, dans lequel les plans de plancher et les planogrammes sont recommandés à chacun de la pluralité de magasins conformément à l'ensemble de motifs reçu à partir d'itérations de troisième niveau, et dans lequel chacun de l'ensemble de motifs comprend des informations de priorisation de catégories et un nombre de magasins adhérant à l'ensemble de motifs, permettant ainsi de décider d'un nombre de catégories avec une priorité élevée pour le remodelage du nombre de magasins.

7. Système selon la revendication 6, dans lequel
a) l'espace final est mesuré dans la pluralité de formats comprenant, i) des pieds linéaires, ii) des pieds carrés, iii) un espace visible pondéré et iv. un espace visible cognitif,
b) l'espace delta est mesuré dans la pluralité de formats comprenant, i) l'espace delta en pieds carrés, ii) l'espace delta en pourcentage, calculé par une proportion de l'espace delta par rapport à un espace ancien occupé par chacune de la pluralité de catégories et iii) l'espace delta en pourcentage, calculé par une proportion de l'espace delta par rapport à un espace disponible pour chacune de la pluralité de catégories de chacun de la pluralité de magasins dans lequel l'espace disponible est décidé par les règles d'optimisation telles qu'un espace minimum et un espace maximum, et
c) l'ordre d'occupation d'espace est représenté par la pluralité de formats comprenant i) des pieds carrés incrémentiels et ii) des pieds carrés cumulatifs.

8. Système selon la revendication 6, dans lequel l'ensemble de motifs reçu à partir de troisièmes itérations est accompagné d'un ensemble de raisons qui conduisent à la formation d'un ensemble de motifs sur la base de facteurs déterminants des ventes associés à un ou plusieurs magasins, et dans lequel la visualisation d'un mécanisme d'attribution d'espace pour un magasin par le biais de vidéos d'animation est permise en utilisant des vecteurs d'ordre total cumulatif correspondants dans lesquels la couleur de chaque cellule est proportionnelle au total cumulatif.

9. Système selon la revendication 6, dans lequel un ensemble de catégories de priorité spécifiques à des magasins pour différentes applications pratiques associées à un remodelage de magasins sont identifiées en localisant les catégories qui gagnent un espace incrémentiel au cours d'itérations initiales et en identifiant des magasins correspondants à partir de l'ensemble de motifs dérivés d'une matrice d'attribution et à partir de vecteurs d'ordre total cumulatif de magasins correspondants.

10. Système selon la revendication 6, dans lequel une plage idéale de changements d'espace pour chaque catégorie pour chaque magasin est décidée en considérant un nombre historique de changements d'espace et une ampleur de changements d'espace des catégories des magasins.

11. Un ou plusieurs supports de stockage d'informations lisibles par machine non transitoires comprenant une ou plusieurs instructions qui, lorsqu'elles sont exécutées par un ou plusieurs processeurs matériels (104), amènent :
l'acquisition de données de magasin sur un laps de temps prédéfini à partir d'une pluralité de magasins ;
l'obtention d'informations de vente, d'espace et démographique à partir des données de magasin sur une pluralité de catégories dans la pluralité de magasins ;
le traitement des informations de vente, d'espace et démographique, via un outil d'optimisation spatiale mis en œuvre par les un ou plusieurs processeurs matériels, pour effectuer une optimisation spatiale conformément à un ensemble de règles d'optimisation prédéfinies comprenant des règles d'optimisation de niveau de catégorie et des règles d'optimisation d'allée, pour générer :
a) une pluralité d'attributions d'espace finales pour chacune de la pluralité de catégories de chacun de la pluralité de magasins ;
b) une pluralité d'attributions d'espace delta pour chacune de la pluralité de catégories de chacun de la pluralité de magasins, dans lequel un espace delta est défini comme une différence entre un espace initial occupé par une catégorie parmi la pluralité de catégories et un espace final suggéré par l'outil d'optimisation spatiale pour la catégorie ; et
c) des détails sur un ordre d'attribution d'espace pour la catégorie pour chaque pied incrémentiel pendant chaque itération d'optimisation spatiale, par l'outil d'optimisation spatiale, capturés dans une pluralité de fichiers journaux pour une pluralité de magasins ;
la création d'une pluralité de vecteurs comprenant :
a) un vecteur d'espace final capturant une attribution d'espace finale correspondant à chacune de la pluralité de catégories d'un magasin parmi la pluralité de magasins, dans lequel l'attribution d'espace finale correspondant à chacun de la pluralité de magasins est traitée dans un format de vecteur ligne unique comme vecteur d'espace final ;
b) un vecteur d'espace delta capturant une attribution d'espace delta pour chacune de la pluralité de catégories pour le magasin, dans lequel l'attribution d'espace delta correspondant à chacun de la pluralité de magasins est traitée dans un format de vecteur ligne unique comme vecteur d'espace delta ; et
c) un vecteur d'ordre d'attribution capturant un ordre de priorité dans une attribution d'espace à partir de l'ordre d'attribution d'espace à travers la pluralité de catégories pour le magasin, dans lequel un fichier journal pour un magasin parmi la pluralité de fichiers journaux est traité en une pluralité de vecteurs lignes avec la même longueur notée comme « vecteurs d'ordre d'attribution de base », dans lequel chaque vecteur ligne représente une itération d'optimisation, et un nombre de vecteurs lignes est égal à un nombre d'itérations et une longueur de chaque vecteur ligne est égale à un nombre de la pluralité de catégories de magasin correspondant, chaque cellule de la rangée représente une catégorie parmi la pluralité de catégories, et une valeur de chaque cellule de la rangée représente une attribution d'espace incrémentielle fixe pour la catégorie pour un pied incrémentiel pendant l'itération, un traitement de vecteurs d'ordre d'attribution de base est effectué en calculant des totaux cumulés pour chaque itération et appelé « vecteurs d'ordre d'attribution total cumulatif » et un traitement supplémentaire est effectué en ajoutant des vecteurs d'ordre d'attribution de base ou des vecteurs d'ordre d'attribution total cumulé un par un pour former un vecteur ligne unique représentant le vecteur d'ordre d'attribution dans deux formats à savoir un vecteur d'ordre d'attribution de base et un vecteur d'ordre d'attribution cumulatif ;
la génération d'une pluralité de matrices d'espace dans lesquelles chaque colonne représente le magasin et un nombre de colonnes est équivalent à un nombre de la pluralité de magasins, et dans lesquelles chaque rangée représente une catégorie et un nombre de rangées équivalent à un nombre de la pluralité de catégories, la pluralité de matrices d'espace comprenant :
a) une matrice d'espace finale, générée à partir du vecteur d'espace final correspondant à chacun de la pluralité de magasins, en convertissant le format du vecteur d'espace final d'un vecteur ligne unique en un vecteur de colonne unique, et en considérant la pluralité de magasins et en agençant une pluralité de vecteurs d'espace final de la pluralité de magasins dans un format de matrice, dans lequel une valeur de chaque élément du vecteur de colonne représente un espace final attribué à chacune de la pluralité de catégories ;
b) une matrice d'espace delta, générée à partir du vecteur d'espace delta correspondant à chacun de la pluralité de magasins, en convertissant un format du vecteur d'espace delta d'un vecteur ligne unique en un vecteur de colonne unique, et en considérant la pluralité de magasins et en agençant une pluralité de vecteurs d'espace delta de la pluralité de magasins dans un format de matrice ; et
c) une matrice d'ordre d'attribution d'espace, générée à partir du vecteur d'ordre d'attribution correspondant à chacun de la pluralité de magasins, en convertissant le format de vecteur d'ordre d'attribution en un format de vecteur de colonne et en considérant la pluralité de magasins et en agençant une pluralité de vecteurs d'ordre d'attribution de la pluralité de magasins dans un format de matrice ;
le traitement, via un outil d'extraction de motif, de la matrice d'espace finale, de la matrice d'espace delta et de la matrice d'ordre d'attribution d'espace en utilisant une pluralité de formats de mesures d'espace final, d'espace delta et d'ordre d'attribution d'espace et en appliquant une standardisation, une création de matrice de covariance et une analyse en composantes principales « PCA » pour identifier un ensemble de motifs pour chacun de la matrice d'espace finale, de la matrice d'espace delta et de la matrice d'ordre d'attribution d'espace sur la base de vecteurs propres et de valeurs propres générés pendant la « PCA », dans lequel la standardisation est effectuée en soustrayant chaque vecteur de magasin d'un vecteur de valeur moyenne dans lequel le vecteur de valeur moyenne est calculé en considérant la pluralité de magasins pour chaque cellule de la matrice d'espace finale, de la matrice d'espace delta et de la matrice d'ordre d'attribution d'espace, et dans lequel la « PCA » est appliquée sur la matrice de covariance pour générer un ensemble de vecteurs propres avec des valeurs propres et des saturations factorielles correspondantes dans lesquelles l'ensemble de vecteurs propres qui sont supérieurs à 1 est considéré comme l'ensemble de motifs ;
la génération d'un score de désadaptation de niveau de magasin en comparant des plans de plancher existants avec l'ensemble de motifs dérivés de chacun de la matrice d'espace finale, de la matrice d'espace delta et de la matrice d'ordre d'attribution d'espace, et le traitement de l'ensemble de motifs pour chacun de la matrice d'espace finale, de la matrice d'espace delta et de la matrice d'ordre d'attribution d'espace sous la pluralité de formats de mesures de l'espace final, de l'espace delta et de l'ordre d'attribution d'espace pour déterminer une qualité de l'ensemble de motifs à partir d'une contribution de variance de l'ensemble de motifs de PCA ;
l'exécution d'itérations à trois niveaux comprenant :
a) un premier niveau d'itérations pour sélectionner un ensemble supérieur de motifs à partir de l'ensemble de motifs formés à partir de chacun de i) la matrice d'espace finale, ii) la matrice d'espace delta et iii) l'ordre d'attribution, sous différents formats d'espace final, d'espace delta et d'ordre d'attribution et la sélection d'un ensemble supérieur de motifs pour un format approprié parmi l'un de l'espace final, de l'espace delta et de l'ordre d'attribution d'espace, dans lequel la qualité de l'ensemble de motifs est maximale pour l'ensemble supérieur de motifs ;
b) un deuxième niveau d'itérations pour appliquer à l'ensemble de motifs reçu à partir des itérations de premier niveau dans lequel un résultat de chaque itération dans le deuxième niveau d'itérations est utilisé pour localiser un magasin de désadaptation en utilisant le score de désadaptation et recalculer l'un quelconque de i) la matrice d'espace finale, ii) la matrice d'espace delta et iii) l'ordre d'attribution d'espace pour uniquement un magasin de désadaptation localisé en utilisant des règles identifiées sur la base d'un résultat d'itération précédente dans le deuxième niveau d'itérations, et générer l'ensemble de motifs en ajoutant un nouveau résultat reçu à partir du magasin de désadaptation pour l'un de i) la matrice d'espace finale, ii) la matrice d'espace delta et iii) l'ordre d'attribution d'espace recalculés, dans lequel l'itération se poursuit jusqu'à ce qu'aucun magasin ne s'écarte du motif en termes d'ajustement d'allée ; et
c) un troisième niveau d'itérations appliqué à l'ensemble de motifs reçu à partir d'itérations de deuxième niveau dans lequel un résultat de chaque itération dans le troisième niveau d'itérations est utilisé pour localiser le magasin s'écartant de l'ensemble de motifs en utilisant une distance multivariée, et recalculer l'un quelconque de i) la matrice d'espace finale, ii) la matrice d'espace delta et iii) l'ordre d'attribution pour uniquement ces magasins s'écartant en utilisant des règles identifiées sur la base d'un résultat d'itération précédente dans le troisième niveau d'itérations, et générer l'ensemble de motifs en ajoutant un nouveau résultat reçu à partir du magasin s'écartant pour l'un de i) la matrice d'espace finale, ii) la matrice d'espace delta et iii) l'attribution d'espace recalculés, dans lequel l'itération se poursuit jusqu'à ce qu'aucun magasin ne s'écarte du motif ; et
la génération d'un ensemble de plans de plancher et de planogrammes conformément à l'ensemble de motifs reçu à partir d'itérations de troisième niveau, dans lequel les plans de plancher et les planogrammes sont recommandés à chacun de la pluralité de magasins conformément à l'ensemble de motifs reçu à partir d'itérations de troisième niveau, et dans lequel chacun de l'ensemble de motifs comprend des informations de priorisation de catégories et un nombre de magasins adhérant à l'ensemble de motifs, permettant ainsi de décider d'un nombre de catégories avec une priorité élevée pour le remodelage du nombre de magasins.

12. Un ou plusieurs supports de stockage d'informations lisibles par machine non transitoires selon la revendication 11, dans lesquels
a) l'espace final est mesuré dans la pluralité de formats comprenant, i) des pieds linéaires, ii) des pieds carrés, iii) un espace visible pondéré et iv) un espace visible cognitif,
b) l'espace delta est mesuré dans la pluralité de formats comprenant, i) l'espace delta en pieds carrés, ii) l'espace delta en pourcentage, calculé par une proportion de l'espace delta par rapport à un espace ancien occupé par chacune de la pluralité de catégories et iii) l'espace delta en pourcentage, calculé par une proportion de l'espace delta par rapport à un espace disponible pour chacune de la pluralité de catégories de chacun de la pluralité de magasins dans lequel l'espace disponible est décidé par les règles d'optimisation telles qu'un espace minimum et un espace maximum, et
c) l'ordre d'occupation d'espace est représenté par la pluralité de formats comprenant i) des pieds carrés incrémentiels et ii) des pieds carrés cumulatifs.

13. Un ou plusieurs supports de stockage d'informations lisibles par machine non transitoires selon la revendication 11, dans lesquels l'ensemble de motifs reçu à partir de troisièmes itérations est accompagné d'un ensemble de raisons qui conduisent à la formation d'un ensemble de motifs sur la base de facteurs déterminants des ventes associés à un ou plusieurs magasins, et dans lesquels la visualisation d'un mécanisme d'attribution d'espace pour un magasin par le biais de vidéos d'animation est permise en utilisant des vecteurs d'ordre total cumulatif correspondants dans lesquels la couleur de chaque cellule est proportionnelle au total cumulatif.

14. Un ou plusieurs supports de stockage d'informations lisibles par machine non transitoires selon la revendication 11, dans lesquels un ensemble de catégories de priorité spécifiques à des magasins pour différentes applications pratiques associées à un remodelage de magasins sont identifiées en localisant les catégories qui gagnent un espace incrémentiel au cours d'itérations initiales et en identifiant des magasins correspondants à partir de l'ensemble de motifs dérivés d'une matrice d'attribution et à partir de vecteurs d'ordre total cumulatif de magasins correspondants.

15. Un ou plusieurs supports de stockage d'informations lisibles par machine non transitoires selon la revendication 11, dans lesquels une plage idéale de changements d'espace pour chaque catégorie pour chaque magasin est décidée en considérant un nombre historique de changements d'espace et une ampleur de changements d'espace des catégories des magasins.
